# EUROPEAN PATENT APPLICATION

(11) **EP 1 024 463 A2**
(43) Date of publication of application: **02.08.2000**
(21) Application number: 00300551.9
(22) Date of filing: 26.01.2000
(51) Int. Cl.: G07F 13/02, G07F 19/00, G07F 7/08, B67D 5/14

(54) **Method and apparatus for automatic gas pump charging cost of gasoline to auto computer using pan technology**

(30) Priority: 29.01.1999 US 240552
(71) Applicant: International Business Machines Corporation, Armonk, NY 10504 (US)
(72) Inventor: Berstis, Viktors, Winchester, Hampshire SO21 2JN (GB); Colson, James Camphell, Winchester, Hampshire SO21 2JN (GB); Alewine, Neal J., Winchester, Hampshire SO21 2JN (GB); Zimmerman, Thomas G., Winchester, Hampshire SO21 2JN (GB)
(74) Representative: Burt, Roger James, Dr.

(57) **Abstract**

A vehicle processes a commodity transaction between a vendor computer system and an onboard computer system where the transaction data is stored available to the vendor computer with little interaction required by the vehicle operator. The onboard computer system communicates to the vendor computer system using personal area network technology adapted to a vehicle. In that way, the user initiates the sequence of events by performing a related function. In the preferred embodiment, the operator connects a fuel nozzle to the vehicle. Then, the transaction may be performed between the vehicle computer and the vendor computer without any assistance from the operator. The transaction may include selecting a commodity or service, debiting a cash account for the selected commodity and enacting a fault sequence in case of a system fault. The transaction accounts can be specific to the vehicle identification or the operator identification.

## Description

The present invention relates to a vehicle onboard computer system that controls various vehicle onboard systems and subsystems. More specifically, the present invention relates to a system and method for implementing user specific commercial transactions between the vehicle onboard computer system and a vendor's computer system. Still more particularly, the present invention relates to a system and method for identifying and authorizing users and implementing user specific parameters relating to electronic commerce transactions that require very little user interaction at the time the transaction occurs.

It has been well known in prior art to conduct cash transactions with a vendor involving some aspect of operating a vehicle. These transactions may include such things as fueling the vehicle, maintenance and upkeep, and transactions concerning governmental fees and licenses. In the past, these transactions have been largely manual transactions requiring the user to perform a number of tasks associated with the transaction. The transaction is usually transacted on a cash basis; however, personal credit cards and commercial credit cards and debit accounts have recently been a popular means of conducting transactions. Each one of these bases requires the user to make a certain number of option selections at the time of the transaction even though the user may have predetermined what those selections will be.

Another problem associated with the transactions described above is the problem of user accountability especially pertaining to a fleet operation involving large numbers of vehicles. Although cash is universally accepted, cash transactions are extremely undesirable because of accounting and accountability problems. Although commercial credit cards have somewhat alleviated accounting problems, accountability still remains a problem because, generally, the commercial account is not indexed to an individual vehicle or user.

What is needed is a means to pre-select user options before transactions occur thereby saving the user valuable time at the time of the transaction and also giving the administrators of the system greater control over making the selections. Additionally, a means of indexing each transaction to a specific vehicle and a specific vehicle operator would allow administrators greater flexibility in tracking commercial transactions among fleet vehicles and greater insight in the planning of future transactions.

A vehicle processes a commodity transaction between a vendor computer system and an onboard computer system where the transaction data is stored available to the vendor computer with little interaction required by the vehicle operator. The onboard computer system communicates to the vendor computer system using personal area network technology adapted to a vehicle. In that way, the user initiates the sequence of events by performing a related function. In the preferred embodiment, the operator connects a fuel nozzle to the vehicle. Then, the transaction may be performed between the vehicle computer and the vendor computer without any assistance from the operator. The transaction may include selecting a commodity or service, debiting a cash account for the selected commodity and enacting a fault sequence in case of a system fault. The transaction accounts can be specific to the vehicle identification or the operator identification.

Accordingly the present invention provides a method for performing a commodity transaction from a vehicle wherein the method is performed on a data processing system, the method comprising: communicating to a second data processing system with an onboard data processing system; identifying the second data processing system; accessing commodity transaction data in a memory associated with the identity of the second data processing system; transferring at least a portion of the commodity transaction data to the second data processing system; performing a commodity transaction in response to transferring at least a portion of the commodity transaction data; and verifying an occurrence of the commodity transaction. More suitably the step communicating to the second data processing system further comprises: handshaking between systems. The memory may or may not be included in the onboard data processing system as appropriate, or alternatively the memory is included in a hand-held memory structure. Preferably the onboard data system is included within a personal area network onboard a vehicle. The commodity transaction may suitably involve one of fuel, toll, maintenance, governmental fee or process, and commercial service.

In a further embodiment of the invention there is provided a method for performing a commodity transaction with a vehicle wherein the method is performed on a vendor data processing system, the method comprising: communicating to an onboard data processing system; identifying the onboard data processing system; receiving commodity transaction data from the onboard data processing system; in response to receiving commodity transaction data, accessing vendor commodity transaction data in a memory associated with the identity of the onboard data processing system; performing a commodity transaction in response to identifying the onboard data processing system, receiving commodity transaction data, and accessing vendor commodity transaction; and verifying an occurrence of the commodity transaction. More suitably the step communicating to the onboard data processing system further comprises: handshaking between systems. The memory may be included in the vendor data processing system. Preferably the method further comprises: transmitting at least a portion of the vendor commodity data to the onboard data processing system, and optionally further comprises: transmitting data to the onboard data processing system while performing the commodity transaction. More preferably the step of communication with an onboard data further comprises: linking to a personal area network onboard the vehicle. The transaction type may suitably be one of fuel, toll, maintenance, governmental process, and commercial service.

In yet a further embodiment of the present invention there is provided a data processing system for performing a commodity transaction from a vehicle, the system comprising: communicating means for communicating to a second data processing system with an onboard data processing system; identifying means for identifying the second data processing system; accessing means for accessing commodity transaction data in a memory associated with the identity of the second data processing system; transferring means for transferring at least a portion of the commodity transaction data to the second data processing system; performing means for performing a commodity transaction in response to transferring at least a portion of the commodity transaction data; and verifying means for verifying an occurrence of the commodity transaction. More suitably the communicating means for communicating to the second data processing system further comprises: handshaking means for handshaking between systems. The memory may or may not be included in the onboard data processing system as appropriate, or alternatively the memory is included in a hand-held memory structure. Preferably the onboard data system is included within a personal area network onboard a vehicle. The commodity transaction may suitably involve one of fuel, toll, maintenance, governmental fee or process, and commercial service.

In yet a further embodiment of the present invention there is provided a vendor data processing system for performing a commodity transaction with a vehicle, the system comprising: communicating means for communicating to an onboard data processing system; identifying means for identifying the onboard data processing system; receiving means for receiving commodity transaction data from the onboard data processing system; accessing means for accessing vendor commodity transaction data in a memory associated with the identity of the onboard data processing system; performing means for performing a commodity transaction in response to identifying the onboard data processing system, receiving commodity transaction data, and accessing vendor commodity transaction; and verifying means for verifying an occurrence of the commodity transaction. More suitably the communicating means for communicating to the onboard data processing system further comprises: handshaking means for handshaking between systems. The memory may be included in the vendor data processing system. Preferably the system further comprises: transmitting means for transmitting at least a portion of the vendor commodity data to the onboard data processing system, and optionally further comprises: transmitting means for transmitting data to the onboard data processing system while performing the commodity transaction. More preferably the communication means for communication with an onboard data further comprises: linking means for linking to a personal area network onboard the vehicle. The transaction type may suitably be one of fuel, toll, maintenance, governmental process, and commercial

The present invention further provides a computer program product for performing a commodity transaction from a vehicle wherein the product implemented in a series of instructions on a computer readable medium and performed on data processing system, the instructions comprising: instructions for communicating to a second data processing system with an onboard data processing system; instructions for identifying the second data processing system; instructions for accessing commodity transaction data in a memory associated with the identity of the second data processing system; instructions for transferring at least a portion of the commodity transaction data to the second data processing system; instructions for performing a commodity transaction in response to transferring at least a portion of the commodity transaction data; and instructions for verifying an occurrence of the commodity transaction. More suitably the instructions for communicating to the second data processing system further comprise instructions for handshaking between systems Preferably the onboard data system is included within a personal area network onboard a vehicle.

The present invention yet further provides a computer program product for performing a commodity transaction with a vehicle wherein the computer program product is implemented as a series of instruction on a computer readable medium and performed on a vendor data processing system, the instructions comprising: instructions for communicating to an onboard data processing system; instructions for identifying the onboard data processing system; instructions for receiving commodity transaction data from the onboard data processing system; instructions for in response to receiving commodity transaction data, accessing vendor commodity transaction data in a memory associated with the identity of the onboard data processing system; instructions for performing a commodity transaction in response to identifying the onboard data processing system, receiving commodity transaction data, and accessing vendor commodity transaction; and instructions for verifying an occurrence of the commodity transaction.

The present invention yet further provides a method in a host data processing system for processing a fuel transfer at a station from the station to a vehicle containing a mobile computing system, the method comprising the data processing system implemented steps of: responsive to detecting a connection between the station and the vehicle via a fuel transfer conduit, establishing communications between a host data processing system and a mobile computing system through the fuel transfer conduit connecting the vehicle with the station; and responsive to establishing a communications link though the fuel transfer conduit, performing a transaction to pay for the fuel transfer to the vehicle. More suitably the method recited in claim 33 wherein the fuel is gasoline. Preferably the step of performing transaction steps of details of querying for data and approval. The method also preferably further comprises allowing fuel transfer responsive to performing the transaction. In a preferred version of the method the fuel transfer automatically starts.

The invention will now be described by way of example and with reference to the accompanying drawings in which:
**Figure 1** depicts a block diagram illustrating a data processing system of the present invention.
**Figure 2** depicts the onboard systems of the present invention as defined in a preferred embodiment of the present invention.
**Figure 3** depicts the suspension and ride system of the vehicle.
**Figure 4** illustrates the comfort system of the vehicle.
**Figure 5** illustrates another system under the control of the onboard computer, the communications interface system.
**Figure 6** illustrates another system under the control of the onboard computer, the navigation and tracking system.
**Figure 7** illustrates another system under the control of the onboard computer, the audio system.
**Figure 8** illustrates the safety system as implemented in the present invention.
**Figure 9** illustrates the engine performance system as related to the present invention.
**Figure 10** illustrates the user interface system as implemented in the present invention.
**Figure 11** illustrates one embodiment of the present invention utilizing a personal area network.
**Figure 12** illustrates another embodiment of the present invention involving a fault occurrence during the fuel transfer process.
**Figure 13** illustrates another embodiment of the present invention involving a fault occurrence during the fuel transfer process, taken from the perspective of the vehicle's onboard computer.
**Figure 14** illustrates the data structure stored in a memory of the present invention.
**Figure 15** illustrates the user ID data structure.
**Figure 16** illustrates the verification data structure.
**Figure 17** illustrates the security level data structure.
**Figure 18** illustrates an extremely abbreviated data structure of possible preferences.
**Figure 19** illustrates the preference limits data structure.
**Figure 20** illustrates the data structure of user logged data.
**Figure 21** illustrates an example of how the onboard computer authorizes user preferences by user security level.
**Figure 22** illustrates a preferred embodiment of the present invention involving electronic commerce between a vehicle and a vendor.
**Figure 23** illustrates a representation of the modulated signal passing between the vehicle and the fuel pump using personal area network

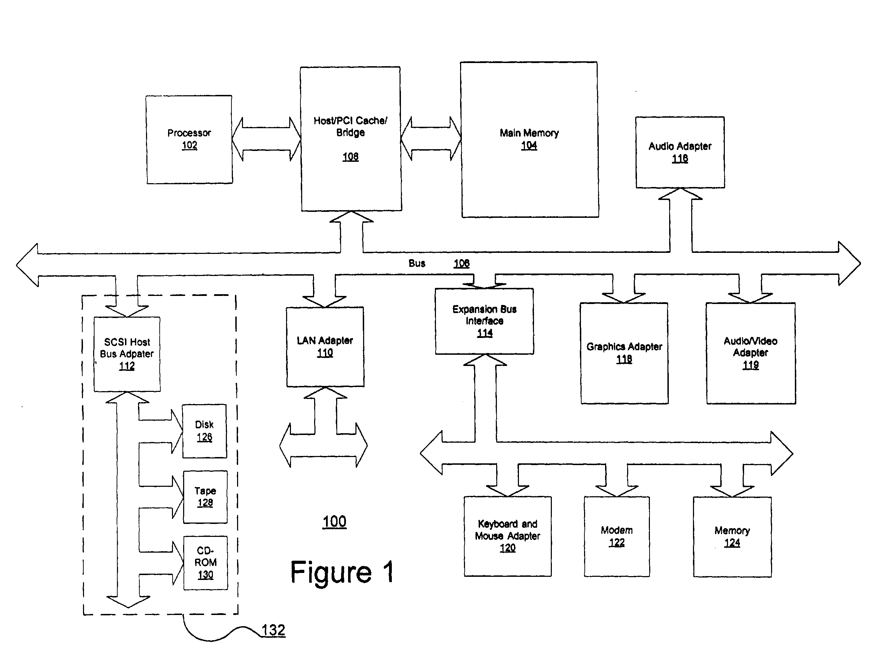

With reference now to **Figure 1,** a block diagram illustrates a data processing system in which the present invention may be implemented. Data Processing system **100** is an example of a client computer. Data Processing system **100** employs a peripheral component interconnect (PCI) local bus architecture. Although the depicted example employs a PCI bus, other bus architectures such as Micro Channel and ISA may be used. Processor **102** and Main Memory **104** are connected to PCI local Bus **106** through Host/PCI Cache/Bridge **108.** Host/PCI Cache/Bridge **108** also may include an integrated memory controller and cache memory for Processor **102.** Additional connections to PCI local Bus **106** may be made through direct component interconnection or through add-in boards. In the depicted example, Local Area Network (LAN) Adapter **110,** SCSI Host Bus Adapter **112,** and Expansion Bus Interface **114** are connected to PCI local Bus **106** by direct component connection. In contrast, Audio Adapter **116,** Graphics Adapter **118,** and Audio/Video Adapter (A/V) **119** are connected to PCI local Bus **106** by add-in boards inserted into expansion slots. Expansion Bus Interface **114** provides a connection for a Keyboard and Mouse Adapter **120,** Modem **122,** and additional Memory **124.** Additional Memory **124** may consist of any type of memory including flash memory. SCSI Host Bus Adapter **112** provides a connection for hard Disk drive **126,** Tape drive **128,** and CD-ROM drive **130.** Typical PCI local bus implementations will support three or four PCI expansion slots or add-in connectors.

An operating system runs on Processor **102** and is used to coordinate and provide control of various components within Data Processing system **100** in **Figure 1.** The operating system may be a commercially available operating system such as OS/2, which is available from International Business Machines Corporation. "OS/2" is a trademark of International Business Machines Corporation. The operating system may also be a real time operating system (RTOS), such as QNX Neutrino™ from QNX Software Systems Ltd., 175 Terranence Matthews Crescent, Kanata, Ontario, Canada K2MLW8. An object oriented programming system such as Java may run in conjunction with the operating system and provide calls to the operating system from Java programs or applications executing on Data Processing system **100** via a Java Virtual Machine. "Java" is a trademark of Sun Microsystems, Inc. Instructions for the operating system, the object-oriented operating system, and applications or programs are located on storage devices, such as hard Disk drive **126,** and may be loaded into Main Memory **104** for execution by Processor **102.**

Those of ordinary skill in the art will appreciate that the hardware in **Figure 1** may vary depending on the implementation. Other internal hardware or peripheral devices, such as flash ROM (or equivalent nonvolatile memory) or optical disk drives and the like, may be used in addition to or in place of the hardware depicted in **Figure 1.** Also, the processes of the present invention may be applied to a multiprocessor data processing system.

For example, Data Processing system **100,** if optionally configured as a network computer, may not include SCSI Host Bus Adapter **112,** hard Disk drive **126,** Tape drive **128,** and CD-ROM **130,** as noted by dotted line **132** in **Figure 1** denoting optional inclusion. In that case, the computer, to be properly called a client computer, must include some type of network communication interface, such as LAN Adapter **110,** Modem **122,** or the like. For mobile vehicle applications, the preferred network communication interface might be a wireless network circuit for communicating digital packets of information to and from the central fleet server. As another example, Data Processing system **100** may be a stand-alone system configured to be bootable without relying on some type of network communication interface, whether or not Data Processing system **100** comprises some type of network communication interface. As a further example, Data Processing system **100** may be a Personal Digital Assistant (PDA) device which is configured with ROM and/or flash ROM in order to provide non-volatile memory for storing operating system files and/or user-generated data.

The depicted example in **Figure 1** and above-described examples are not meant to imply architectural limitations with respect to the present invention. Although **Figure 1** provides examples of configurations of computer systems on which the present invention may execute, the following background information may provide a context for understanding the overall computing environment in which the present invention may be used.

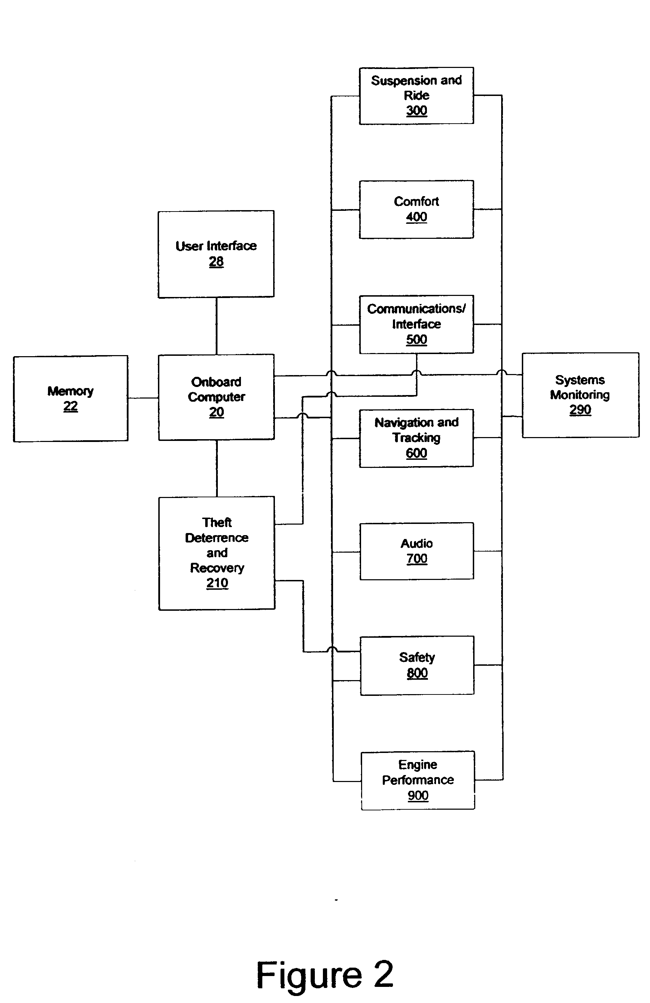

**Figure 2** describes the systems of the present invention as defined in a preferred embodiment of the present invention. In the present invention, the vehicle may contain one or more Onboard Computer(s) **20.** Users control different systems within the vehicle through Onboard computer **20.** A specific user can only gain as much control of a system or subsystem as authorized by Onboard Computer **20.** A user may fall into one or more security level(s), for instance, low level security, master level security, administrator, service attendant, parking attendant or semi-user. The varying levels of security allow users having different access priorities to access only the systems authorized by the level of security that corresponds to the user's security level. Other, more specialized security levels might also be available for special purpose operation of the vehicle, such as thief and drunk driver levels which severely limit access and performance of the vehicle. Implementing the different security levels is primarily, a software function which authorizes security levels in a series of IF tests in a logic flow. This is an extremely effective means of implementing security levels because the preferred embodiment consists of a closed system which is protected from arbitrary software being installed from unknown sources. Alternatively, each security level could be a separate level of hardware. Onboard Computer **20** also contains an onboard computer Memory **22** which would store the software logic described above. Onboard Computer system **20** is intended to be exemplary in nature, and it is not intended in any way to restrict the implementation of this invention.

In one embodiment of this invention, Onboard Computer **20** controls several onboard systems through its different security levels. For simplicity, the invention is described largely as consisting of two security levels, low and high, corresponding to two different levels of user security. One feature of this invention is that accessing and changing preferences relating to any one of these systems can be done only by the user who has a corresponding security level for the security level which controls the specific system.

Taking first the lower level security, a low level security user may access and change preference settings for one or more of the following onboard systems: Suspension and Ride system **300;** Comfort system **400;** Communications/Interface system **500;** Navigation and Tracking system **600;** Audio system **700;** and Systems Monitoring system **290** for the above-mentioned onboard systems.

A user possessing a higher security level, such as a master security level as authorized by Onboard Computer **20,** in addition to resetting and adjusting the preference settings for the systems requiring a lower level security level for access, may also adjust the preference settings of the systems requiring a higher level of security for authorization. Higher level security authorization is required for: Safety system **800;** Engine Performance system **900;** and Theft Deterrence and Recovery system **210.**

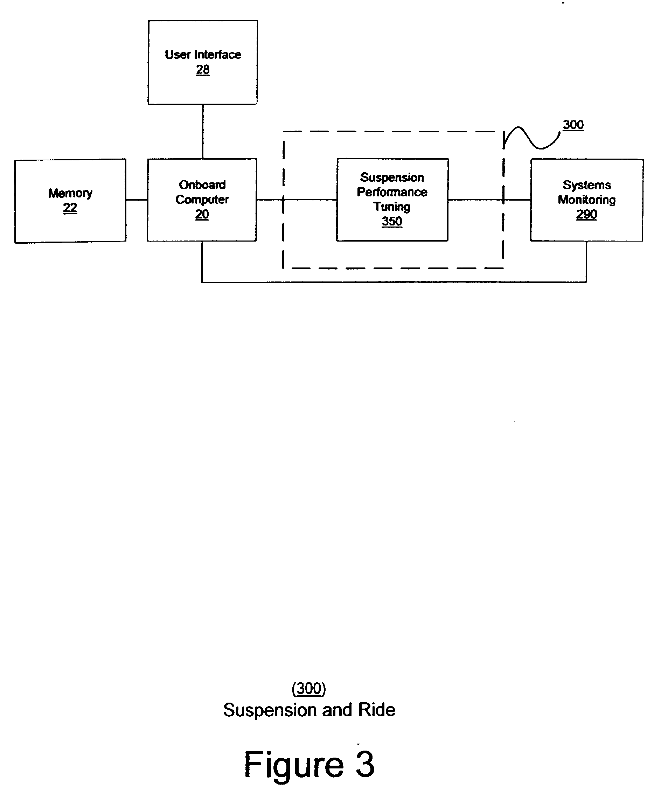

**Figure 3** depicts the suspension and ride system of the vehicle. The dashed line around the subsystems depicts which functions are controlled by the system. Suspension and Ride system **300** and associated subsystems are controlled by preferences which set functions associated with the particular subsystems. Suspension and Ride system **300** includes Suspension Performance Tuning **350.** By the user specifying suspension performance tuning parameters, the vehicle's ride attributes, such as pitch, yaw, roll and stiffness, can be changed.

As the user is identified through the use of a user ID via User Interface **28,** Onboard Computer **20** extracts certain performance settings from onboard Memory **22** which are indexed to the user's name or ID number. These performance settings include user specific parameters which are used to modify each of the functions described above. One example is that a user may prefer a stiffer ride and may prefer a certain feel when he operates the vehicle. Therefore, the user may select certain parameters having to do with suspension performance tuning to affect the vehicle's ride. These parameters adjust each one of the functions mentioned above associated with the subsystem in order to give that user the ride which he desires. Systems Monitoring **290** continually monitors pitch, yaw, roll and stiffness attributes of the vehicle's ride and transmits the information to Onboard Computer system **20.** In another embodiment of this invention, Systems Monitoring system **290** continually updates the suspension performance tuning in order to maintain that overall riding effect desired by the user. Therefore, as suspension and ride parts such as tires, shocks, struts, springs and bearings wear, Systems Monitoring system **290** monitors each one of the functions for the desired effect. If the results monitored by Systems Monitoring system **210** are not within the user's set preference, Onboard Computer system **20** may attempt to adjust each one of the functions automatically in an attempt to adjust the ride to the user's desired preferences--in other words, reset the user specified ride parameters automatically.

In another embodiment, the user merely sets parameters associated with suspension performance tuning, and Systems Monitoring system **290** merely monitors the functions and transfers the functional output to Onboard Computer **20.** In this embodiment, it is left up to the user to manually set each one of the ride and suspension parameters, and as the parts of the vehicle change with respect to wear or damage, the user is expected to manually update each one of the parameters. Although this is possible, it is unlikely that the ordinary user would possess the skill necessary to make those adjustments autonomously, thus requiring Onboard Computer **20** to calculate those functional parameters for the user. Therefore, while expert drivers such as race car drivers, mechanics and the like may possess the knowledge needed to adjust these parameters, the ordinary weekend vehicle operator might rely on a routine stored within Onboard Computer **20** to make those adjustments.

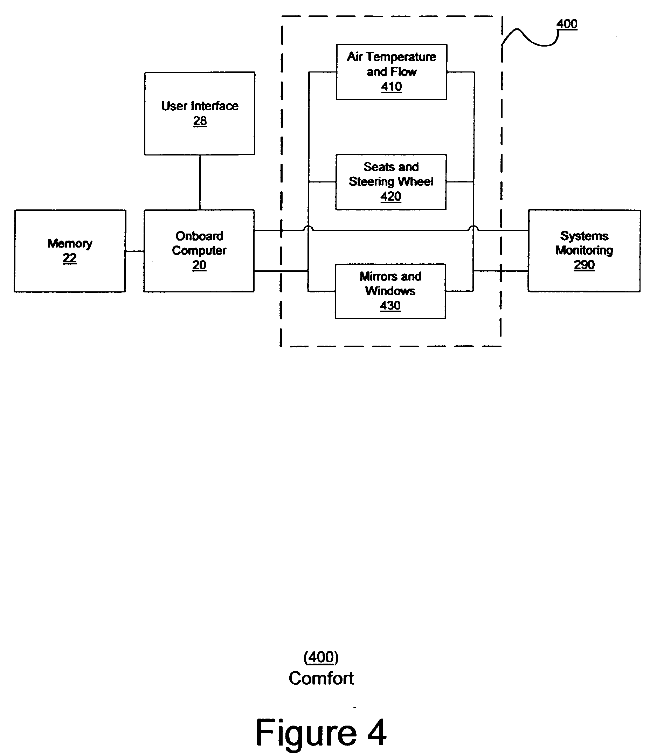

**Figure 4** illustrates another system under the control of every user, the Comfort system **400.** Comfort system **400** includes: Air Temperature and Flow subsystem **410;** Seats and Steering Wheel subsystem **420;** and Mirrors and Windows subsystem **430.** Once the user has been identified by Onboard Computer **20** via User Interface **28,** Onboard Computer **20** retrieves user specific parameters from system Memory **22.** Those user specific parameters are used to adjust the various subsystems of Comfort system **400.** If a user enjoys the air temperature somewhat lower and the flow higher than other users, as the user is identified by Onboard Computer **20,** Air Temperature and Flow subsystem **410** are automatically adjusted to the user specific parameters stored in Memory **22.** Therefore, the user would not have to readjust the air temperature and flow parameters every time the user enters the car, but rather merely satisfy identification to Onboard Computer **20,** and Onboard Computer **20** would retrieve the user's specific user parameters from Memory **22** and adjust Comfort system **400** accordingly.

Other conveniences include adjusting seats and steering wheel positions, and mirrors and windows for particular users. As the user's height and proportions tend to change from user to user, it would be advantageous for each user to preset such settings as the seat position setting and the steering wheel position, along with mirror positions and window positions for the individual user. As the user drives the vehicle, and climate conditions or tastes change, the user may have occasion to adjust certain of the above-mentioned subsystems. As the user adjusts the subsystems, Systems Monitoring system **290** notes these adjustments and transmits the adjustments to Onboard Computer **20.** Onboard Computer **20** then may store the adjustments to system Memory **22.** On exiting the vehicle, the user need not reset the various user parameters that were initially stored in Memory **22,** as these have been updated while the user operated the vehicle.

In one embodiment, Onboard Computer **20** merely retains the updated user specific parameters within Memory **22** as the user exits the vehicle, retrieving them again as the user specific parameters when the user is again identified to Onboard Computer **20.** In another embodiment, updates fed to Onboard Computer **20** via Systems Monitoring system **290** are merely transient. In that embodiment, the updates are lost once the user exits the vehicle unless the user takes some affirmative action to save them. In that embodiment, once the user exits the vehicle the updated parameters are lost in lieu of the initial user specific parameters.

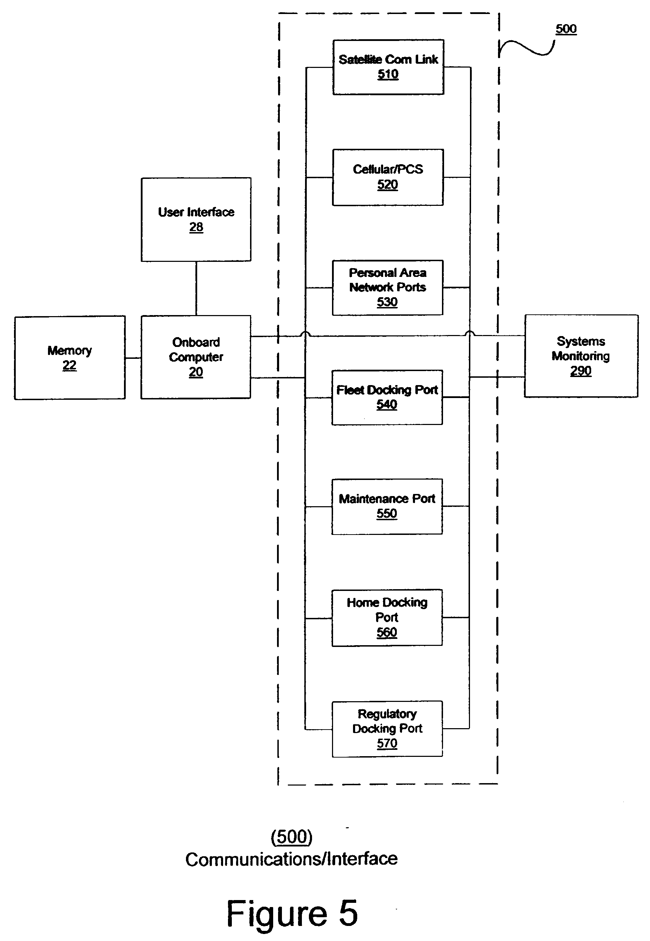

**Figure 5** illustrates another system under the control of the onboard computer, the communications and interface system. Another system that may be under the control of lower level security users is Communications/Interface **500.** In a fully integrated onboard computer system, the ability to access large amounts of data for the convenience and safety of the operator becomes more and more important. Also, as the complexity of vehicles increases, the maintenance of those vehicles is expedited by allowing access to Onboard Computer **20** and the various systems through a specialized maintenance interface.

One embodiment of the present invention, Communications/Interface system **500,** consists of various subsystems as fulfill the various above-mentioned needs. These include: Satellite Com Link **510;** Cellular/PCS communications **520;** Personal Area Network Port **530;** Fleet Docking Port **540;** Maintenance Port **550;** Home Docking Port **560;** and Regulatory Docking Port **570.** Depending upon the intended use of the vehicle, some or all of these communications subsystems may be eliminated or substituted with other types of communications subsystems. Other subsystems, such as Satellite Com Link **510** and Cellular/PCS communications **520** may contain extensive local memories for holding user specific data like earth link addresses and telephone numbers. Alternatively, earth link addresses and telephone numbers may be stored on a personal memory such as a SmartCard or magnetic swipe card, or in system Memory **22,** and indexed by user.

In one example of the communications subsystems, for instance a fleet vehicle operation, vehicles could be continually tracked via Satellite Com Link **510.** The fleet dispatcher, therefore, could watch the progress of vehicles and goods from the origin to the destination. If the dispatcher detects a delay somewhere along the route, he could immediately contact the vehicle through Cellular/PCS **520** link or Satellite Com Link **510** to ascertain the problem and try to help the vehicle operator formulate an alternate route.

Personal Area Network Port **530** would be useful for such things as ascertaining if a vehicle is authorized to, for instance, go through a toll booth. There, Onboard Computer **20** would automatically link with a computer at the toll booth via Personal Area Network Port **530** and communicate to the toll booth computer an electronic cash account number by which the toll computer could access and debit the cash amount of the toll, thereby eliminating the need for the driver of the vehicle to stop the vehicle and pay a toll. This would also eliminate the need for the driver to carry any cash while enroute; and in fact, the vehicle itself may not even need to have the cash account, as it could merely link to the home or fleet headquarters and debit a financial account for the cash.

Another interface particularly helpful in fleet operation is a Fleet Docking Port **540.** Although in the preferred embodiment, Fleet Docking Port **540** is a specific hardware port, fleet docking may also be realized by using the wireless network circuit described above in reference to **Figure 1.** Fleet Docking Port **540** would be useful for an operation that tracks several vehicles up to several thousand vehicles. As the vehicle would enter the home terminal, the vehicle could park for transfer of cargo or maintenance, or whatever, and then be linked via Fleet Docking Port **540** to the terminal computer which in turn would be linked to the main operational computer. Thus, as the truck receives maintenance, or on or off loads cargo, the information concerning the prior trip could be downloaded from Onboard Computer **20** Memory **22,** and information pertaining to the next scheduled trip, including maps, itinerary, electronic cash and the like, could be loaded onto Onboard Computer **20** Memory **22.** Vehicle operators could also be authorized and de-authorized for the vehicle.

As noted above, detailed maintenance records are also important, especially as the number of vehicles in a fleet operation increases. Therefore, a specific Maintenance Port **550** would be useful. Maintenance Port **550** would provide instant access to certain files or records and allow for testing of onboard systems simultaneously with other fleet interface operations. While Maintenance Port **550** indicates that, primarily, the access is limited to maintenance of the engine and onboard systems and subsystems, Maintenance Port **550** should also have access to Onboard Computer **20** main Memory **22** to ascertain such things as fuel and mileage logs, distances traveled, environments traveled in and the like. In this way, an expert mechanic could determine the overall maintenance condition of the unit by comparing it to its previous performance.

Home Docking Port **560** would also be useful in a fleet operation where the vehicle operator may be required to bring the vehicle home. In that case, the vehicle operator would merely dock the vehicle at the home port and, using the user's home computer, the fleet operations could interface with the computer, for instance while the operator was away or asleep or on another task. In this way, Onboard Computer **20** Memory **22** could be uploaded with pertinent information about an upcoming trip.

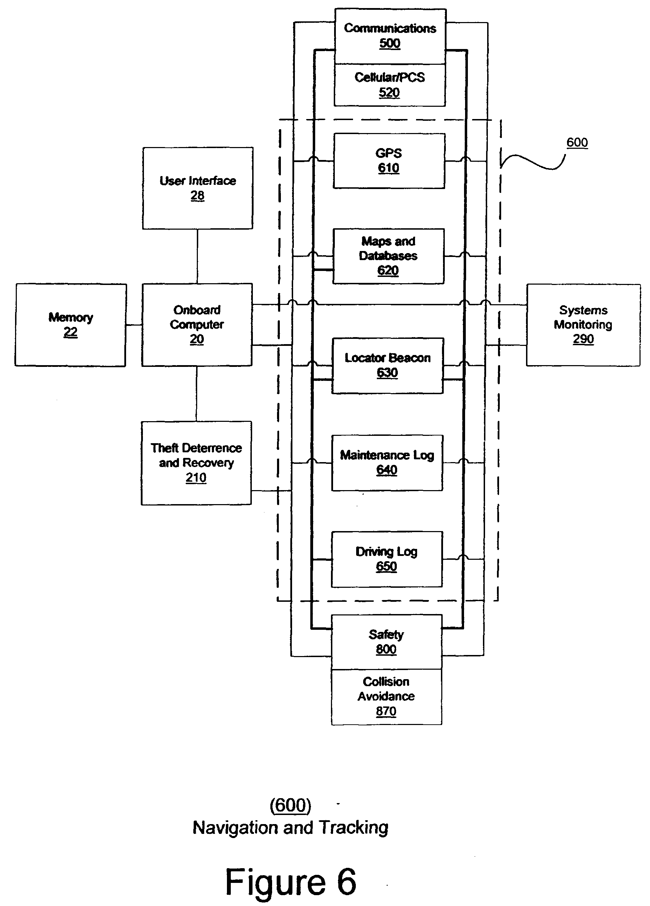

**Figure 6** illustrates another system under the control of the onboard computer, the navigation and tracking system. Another important onboard system is Navigation and Tracking system **600.** A typical Navigation and Tracking system **600** may include GPS **610** for ascertaining the exact vehicle position via geosynchronous positioned satellites. Maps and Databases **620** would probably reside in the system Memory **22.** Maps and Databases **620** might also be fairly transient, being uploaded and downloaded as the intended route of the vehicle changes. In another aspect of the invention, Maps and Databases **620** may be downloaded via Satellite Corn Link **510** or Cellular/PCS **520** connection to the vehicle's home terminal.

Navigation and Tracking system **600** may also include Locator Beacon **630.** While Locator Beacon **630** could take many forms and work in cooperation with one of the communication systems, either Satellite Com Link **510** or Cellular/PCS **520,** Locator Beacon **630** may be a separate subsystem providing a radio frequency beacon used to locate the vehicle in case of emergency or possibly to track vehicle movements within a local area for a fleet dispatcher.

Another important set of tracking databases might be Maintenance Log **640** and Driving Log **650,** which are somewhat related. For an expert mechanic to properly maintain a vehicle, it is useful to have within the vehicle's Maintenance Log **640** the prior routes and conditions in which that vehicle was driven. In that way, when the vehicle experiences what appears to be a sudden loss in performance over the last few trips, a master mechanic can examine the log to note if there is any difference in the driving pattern. Along that same vein, Driving Log **650** could also be useful to a master mechanic in examining the actual driving performance of the vehicle driver. Therefore, by carefully examining these two logs, a master mechanic might merely conclude that what appears to be poor vehicle and engine performance can merely be attributed to the change in drivers, driving patterns or routes.

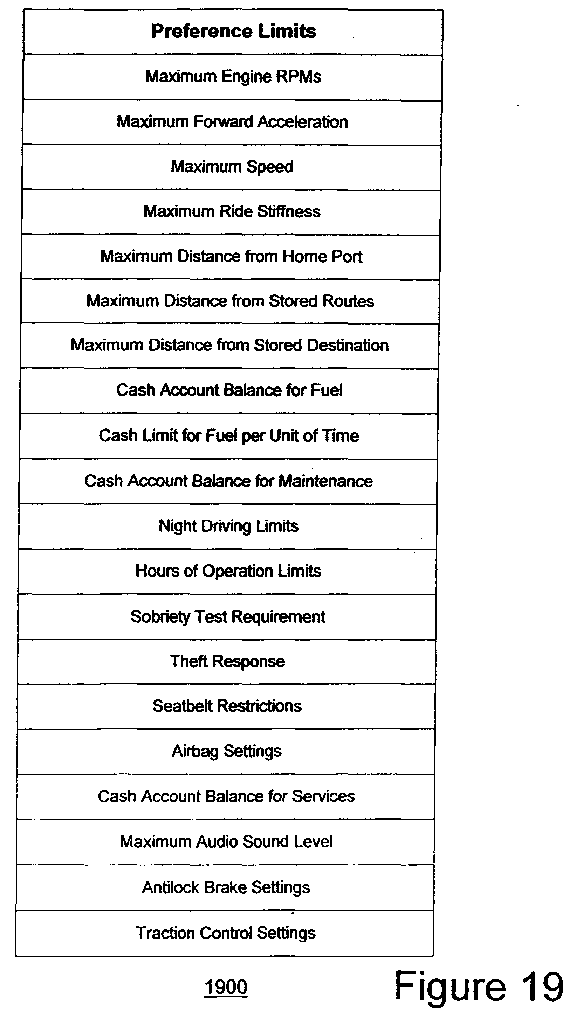

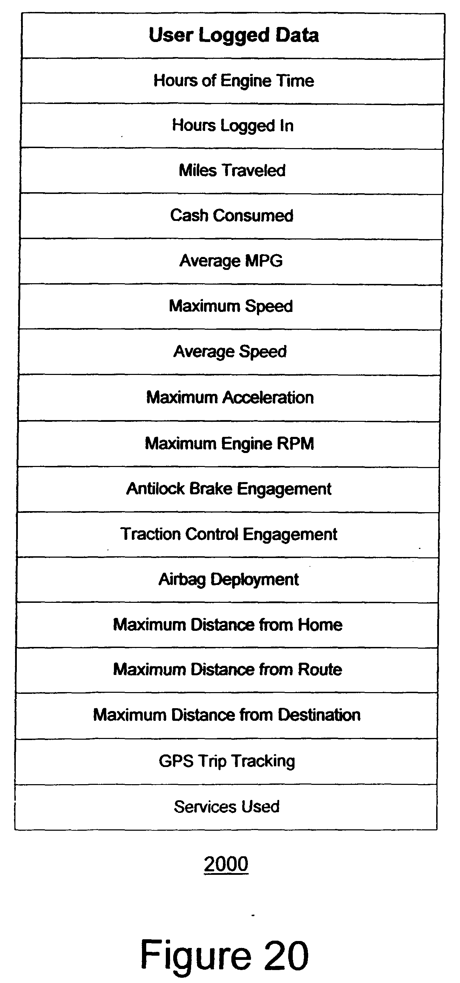

Additionally, Driving Log **640** and Maintenance Log **650** can be used together to assemble data in User Logged Data **2000, Figure 20.** User logged data is indexed by user and might contain fields such as the operation of the vehicle, a specific trip and other data. The log could be displayed on User Interface **28** or at the user's home terminal by a user having an administrator security level. User Logged Data **2000** is an extremely useful resource for setting preference limits as shown on data structure **1900, Figure 19.** The performance of each user under a specific security level can be monitored by analyzing User Logged Data **2000,** and specific preferences can be set for that user. For instance, if a user appears to be prone to extremely fast accelerations, an administrator examining the Maximum Acceleration field of User Logged Data **2000,** may limit that user. The administrator can limit vehicle acceleration to a more moderate rate by changing 5 feet per second² to 3.5 feet per second² in the Maximum Forward Acceleration field of Performance Limits data structure **1900.**

Working in close association with Navigation and Tracking system **600** would be Communications/Interface system **500** and especially Cellular/PCS subsystem **520.** Additionally, Theft Deterrence and Recovery system **210** and Collision Avoidance subsystem **870** of Safety system **800** could also make extensive use of Navigation and Tracking system **600.**

In one example, if a vehicle is identified as being stolen or being used in an unauthorized manner, the vehicle can automatically ascertain its position via use of GPS subsystem **610** and Maps and Databases subsystem **620.** Onboard Computer **20** could then use Communications/Interface system **500** to transmit the information through either Cellular/PCS subsystem **520** or Satellite Com Link subsystem **510** to the fleet dispatcher or local authorities. Additionally, once it has been positively confirmed that the vehicle has been stolen, Locator Beacon **630** could be turned on to aid the police in determining the location of the vehicle.

Another important feature of this invention, Safety system **800,** including Collision Avoidance subsystem **870,** would make extensive use of Maps and Databases **620** and GPS **610** subsystems in the event of an accident. For instance, Collision Avoidance subsystem **870** might, through some combination of events, detect that an accident that is likely to cause injury or death is imminent. In that case, rather than waiting for the accident to actually occur, Onboard Computer **20,** using one of Communications/Interface **500** subsystems, either Cellular/PCS **520** or Satellite Com Link **510,** can place an emergency call to the fleet dispatcher, to the vehicle's home or possibly to the local authorities, such as a 911 emergency call. In that way, once the accident actually occurs and the vehicle becomes inoperable, including Onboard Computer **20,** a distress signal has already been issued by Onboard Computer **20.** If, on the other hand, the accident which was determined by Onboard Computer **20** to be imminent does not occur, or the severity of the accident is limited, the user may merely cancel the imminent distress call.

In a further aspect of the invention, once the distress call has been received by the local authorities or the vehicle dispatcher, the receiver of the call may attempt to communicate to the vehicle via Communications/Interface system **500** to ascertain the exact condition of the, vehicle and driver. If no response is mirrored from the vehicle, it could be rightly assumed by the fleet dispatcher that the accident has occurred and the local authorities could be alerted of the likelihood that a serious accident involving that specific vehicle has occurred. The approximate vehicle location which was issued during the distress call could be provided.

Of course, under ordinary use, vehicles tend to break down or have mechanical difficulties of one type or another; and somehow, the likelihood is that, when that occurs, the vehicle operator will not have a clear idea of the vehicle's location within a particular driving area. By using the integrated Navigation and Tracking system **600,** the vehicle operator can quickly determine the vehicle's location at the time of the incident and, using Communications/Interface system **500,** call either a dispatcher, mechanic or a service company for aide.

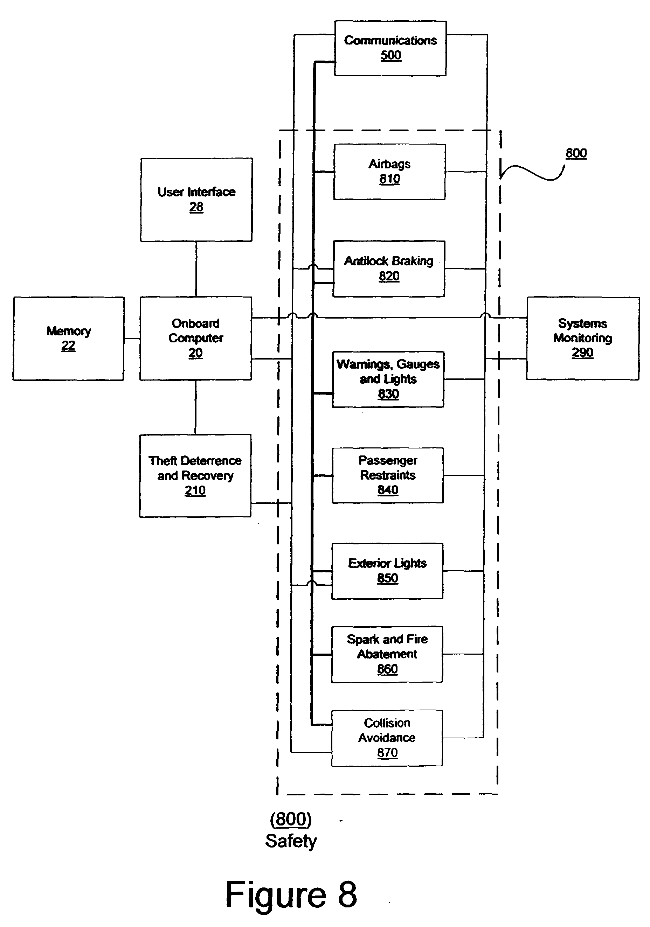

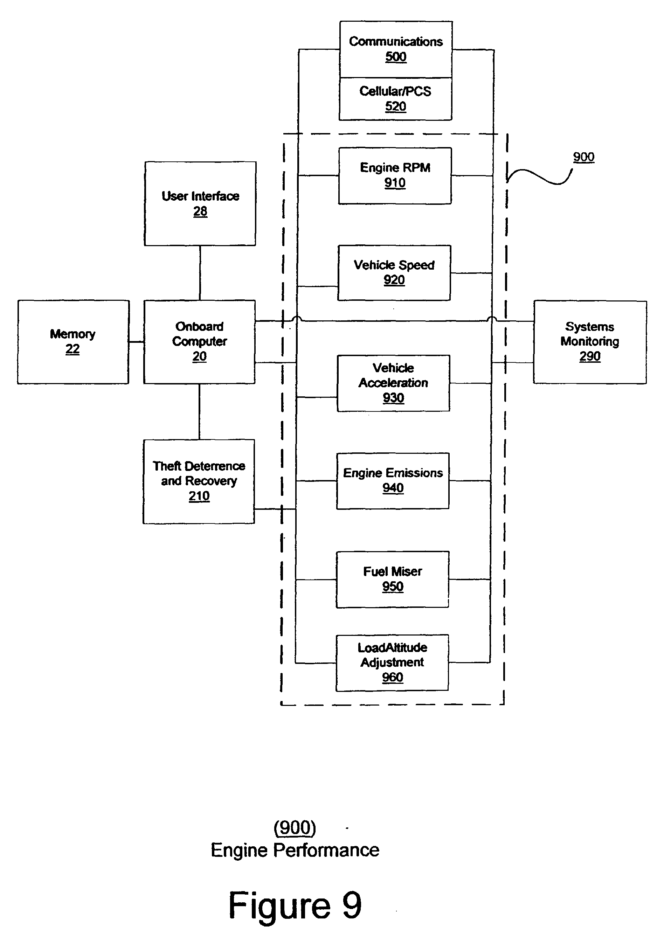

In other embodiments, performance limits may be adjusted to limit the maximum distance a vehicle is authorized to travel from its home base or in deviation from a predetermined route of travel. Working in combination with Safety system **800** and Engine Performance system **900,** Warnings, Gauges and Lights subsystem **830** uses visual or audio indicators to gently remind the vehicle operator that the limits of travel are being exceeded (see **Figure 8).** Finally, when the infraction becomes critical, the vehicle is gently caused to come to a stop by reducing the maximum vehicle speed parameter limit which reduces the vehicle's speed using vehicle Speed subsystem **920, Figure 9.**

However, prudent safety operation dictates that the vehicle should always be allowed to move very short distances, such as one hundred feet, just in case the vehicle operator becomes de-authorized at a point which is unsafe, such as a railroad crossing. This gives the de-authorized operator an extra measure of distance to travel.

Finally, a user may be restricted from operating the vehicle further than a certain number of miles from its home to reduce unauthorized trips and joy riding. A regular route vehicle may be limited to a prescribed route of travel and any variation might be strictly prohibited. However, in most instances the parameters are not so strict as to allow the vehicle to be maneuvered around detours.

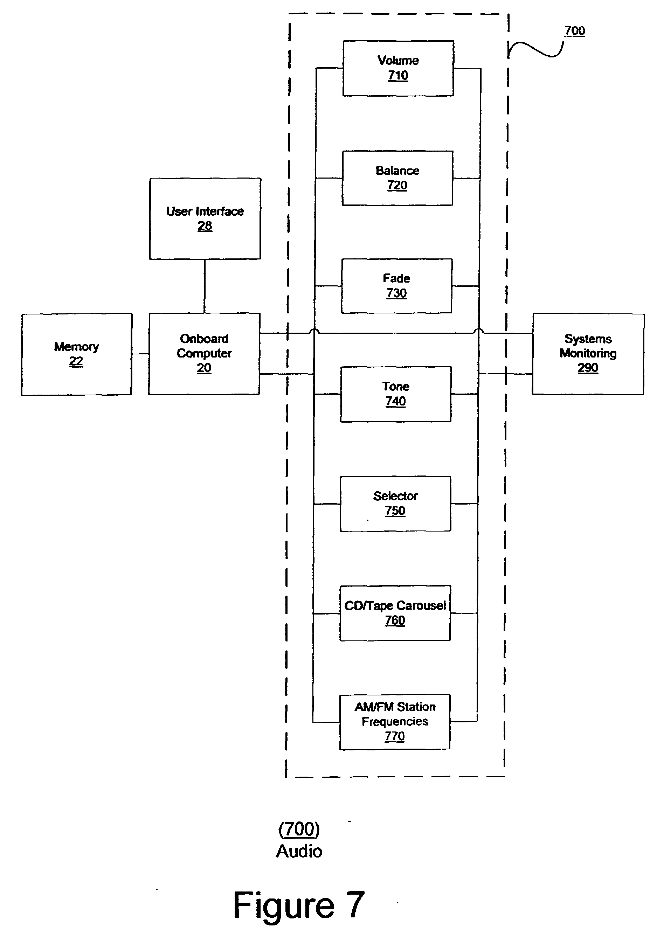

**Figure 7** illustrates another system under the control of the onboard computer, the audio system. Another onboard system which would be particularly convenient for multiple vehicle users would be Audio system **700.** Audio system **700** connects to Onboard Computer **20,** which restricts access to users who do not possess the required security level. Users such as parking attendants and the like who may be required to operate the vehicle only for short distances, are not expected to use the vehicle's audio system. Audio system **700** would allow each operator to select preferred AM/FM radio stations, compact disks or tape selections for listening. In addition, it would allow the individual users to select unique preferences for volume levels, tone and other audio quality settings. Audio system **700** contains: Volume subsystem **710** for adjusting the volume of Audio system **700;** Balance subsystem **720** for adjusting the balance between left and right outputs of Audio system **700;** Fade subsystem **730** for adjusting front and rear outputs of Audio system **700;** and Tone subsystem **740** or comparable subsystem for adjusting the frequency response or spectral response of the outputted sound. Audio system **700** may also include Selector **750,** which selects the user specific devices such as CD, tape, AM/FM radio or other possible outputs. Audio system **700** may also contain CD/Tape Carousel **760,** which stores a variety of CDs or tapes on a ready-to-use basis, allowing the user to merely select from an available selection in CD/Tape Carousel **760** rather than having to reload CDs or tapes. Finally, Audio system **700** could include AM/FM Station Frequencies subsystem **770,** which includes the user's preferred station settings, along with possible station types and a menu of stations in the vehicle's area.

Audio system **700** works in a fashion similar to the other systems in that the user is identified to Onboard Computer **20** via User Interface **28.** Once the computer recognizes the user, the computer then accesses audio preferences which can be stored in computer Memory **22.** Those preferences are then transmitted to Audio system **700** because the user has been authorized by the software security logic performed on Onboard Computer **20.** Pre-stored user specific preference settings for volume, balance, fade and tone of the outputted audio adjust the various subsystems such as Volume subsystem **710,** Balance subsystem **720,** Fade subsystem **730** and Tone subsystem **740.** In addition, user-defined preferences stored in Memory **22** would determine which output device the user has chosen to listen to and transmit that information to Selector **750,** which then activates the appropriate device, either radio or CD or tape. Once that device is activated, it in turn accesses the tape and selection or CD and selection from the CD/Tape Carousel subsystem **760** or the AM/FM Station Frequencies subsystem **770** and plays the appropriate selection which the user has predefined and stored in Memory **22.** In addition, as the user operates the vehicle, Systems Monitoring system **290** continually monitors manual adjustments by the user to each one of these subsystems. Those adjustments can be used to update the user preferences in the onboard system Memory **22.** When the user exits the vehicle, these preferences may be used to replace the previous user specific preferences stored in Memory **22** or may merely be decimated in favor of the pre-stored user specific preferences in Memory **22.**

**Figure 8** illustrates Safety system **800** as implemented in the present invention. Safety system **800** is contained within the dashed lines of **Figure 8.** Safety system **800** of the present invention is authorized only for higher security, level users than the systems discussed thus far. Therefore, as the user accesses Onboard Computer **20** via User Interface **28,** the user's ID is ascertained by Onboard Computer **20.** The user ID is then compared to a list of IDs to ascertain the level of security that is authorized for the user associated with this particular ID. Again, as in the other systems described above, Onboard Computer **20** would then authorize the user's ID number and retrieve user specific parameters from system Memory **22.** The user is granted access to Safety system **800** only if he is authorized for a higher level of security than the normal user. Therefore, Onboard Computer **20** will only grant control of Safety system **800** to users possessing a master or higher level of security authorization. The user specific parameters would be accessed and applied to the various subsystems within Safety system **800.** Safety system **800** contains various subsystems which relate to the safety of the vehicle. Those subsystems include: Airbags **810;** Antilock Braking **820;** Warnings, Gauges and Lights **830;** Passenger Restraints **840;** Exterior Lights **850;** Spark and Fire Abatement **860;** and Collision Avoidance subsystem **870.**

In one embodiment, Airbags **810,** may be either enabled or disabled depending upon the user's preferences or safety needs. For instance, in normal user mode all of the airbags in the car would be active. However, certain users with access to the necessary security level may disable certain airbags via Airbags subsystem **810.** In cases where a parent always drives with a young child in a car seat, the airbags adjacent to the car seat might be disabled by setting the appropriate user specific preferences. Alternatively, the user or certain passengers might be of such slight stature that deployment of the airbags may be more hazardous than the accident itself, especially in a low-speed accident. In that case, that user may prefer to disable one or more of the airbags in the passenger compartment via Airbags subsystem **810.**

Other preferences might disable antilock braking for certain users via Antilock Braking subsystem **820.** Also, Warnings, Gauges and Lights subsystem **830** may have preferences as far as warning defaults and the like, to be set depending on the user's preferences. These may consist of configuring graphic displays to setting warnings messages as either visual, text, voice or audio warnings. Passenger Restraints subsystem **840** might be set to require all passengers to be fully restrained before the vehicle will move. One method of implementing this requirement totally within Safety system **800** would be for vehicle Antilock Braking subsystem **820** to engage the brakes, thereby prohibiting the vehicle from moving until all passengers are fully restrained.

Other subsystems include Exterior Lights subsystem **850,** which monitors and controls the exterior lights. Therefore, when an exterior light burns out or is damaged, Systems Monitoring system **290** immediately communicates the status to Onboard Computer **20,** and the information is conveyed to the user via User Interface **28** or through Warnings, Gauges and Lights subsystem **830.** Another subsystem important to safety is Spark and Fire Abatement subsystem **860.** While most modern cars and trucks contain only minimal spark and fire subsystems, in the case of airplanes and marine vehicles, because of the extreme danger uncontrolled heat and fire pose to those vehicles' safety, they contain more sophisticated spark and fire abatement subsystems.

Another subsystem important to the safety of operation is Collision Avoidance subsystem **870.** Because collision avoidance is one of the most rapidly changing safety items on a vehicle today, even more advancement in the area of collision avoidance is expected in the future. A collision avoidance subsystem may be further partitioned into front and rear subsystems or even into xyz direction subsystems for vehicles that do not travel along a plane. In one embodiment, Collision Avoidance subsystem **870** is linked inexorably to Antilock Braking subsystem **820,** Passenger Restraints subsystem **840** and Airbags subsystem **810.** In addition, Collision Avoidance subsystem **870** is connected to Communications/Interface system **500.** Collision Avoidance subsystem **870** will continually monitor the vehicle's position with respect to the positions of all other vehicles and obstacles in the proximity of the vehicle. Once the possibility of a collision is detected by Collision Avoidance subsystem **870,** Collision Avoidance subsystem **870** attempts to warn the operator through Warnings, Gauges and Lights subsystem **830** using audible and visible alerts intended to make the operator aware that a collision involving this vehicle is likely. At some point before an imminent collision, Collision Avoidance subsystem **870** may act autonomously to avoid the collision. For instance, Collision Avoidance subsystem **870** may set the antilock brakes via Antilock Braking subsystem **820.** Collision Avoidance subsystem **870** may also communicate to the local authorities via Communications/Interface system **500** that a collision involving the vehicle is likely or imminent. Collision Avoidance subsystem **870** may also allow airbags to deploy faster by using Airbags subsystem **810** in combination with Collision Avoidance subsystem **870.** Then, rather than relying on the airbags to deploy in response to impact sensors along the bumpers and sides of the vehicle, the user modifies the user specific parameters associated with Collision Avoidance subsystem **870** to deploy the airbags when the vehicle reaches a threshold proximity to the obstruction. Therefore, rather than the airbag being triggered by a certain amount of front or rear-end deformation of the vehicle, the airbag deployment is triggered just before the vehicle impacts with the obstruction, thereby saving valuable milliseconds in deployment. Also, changing the user specific parameters to deploy airbags sooner allows for lower speeds of acceleration within the airbags, which has been determined to be advantageous to smaller and lighter users and passengers.

Another embodiment of the present invention, Theft Deterrence and Recovery subsystem **210,** might be connected with both Antilock Braking subsystem **820** and Exterior Lights subsystem **850.** This combination would allow Theft Deterrence and Recovery subsystem **210** to activate certain exterior lighting configurations and/or antilock brakes at certain times during a vehicle theft. In one example, the user may pre-set certain user specific parameters that would allow a vehicle theft to occur only in certain places. For instance, it might be that the user would allow the vehicle to be stolen from the user's home but not the user's place of business. This is an important safety consideration, being that there is a likelihood of violence occurring during a frustrated theft attempt. Therefore, in attempt to avoid frustrating a potential vehicle thief at the user's home, the user may elect to allow the vehicle to be stolen and then alert the local authorities via Communications/Interface system **500.** In addition, Theft Deterrence and Recovery system **210** could reconfigure certain exterior lights that are not visible to the present unauthorized operator. For instance, a vehicle that is being operated by an unauthorized user might be configured to flash one exterior brake light each time the brake pedal is pressed. Therefore, authorities witnessing a flashing rear brake light might have reasonable suspicion to stop such a vehicle and inspect it. In another embodiment, the Antilock Braking subsystem **820** may be set to trigger the brakes upon the unauthorized user traveling one or two miles from the user's home. In that case, the vehicle would become completely inoperable and the unauthorized user would hopefully abandon the vehicle. Thus, the vehicle would be available for safe recovery.

**Figure 9** illustrates Engine Performance system **900** as related to the present invention. Like Safety system **800,** Engine Performance system **900** requires higher level security for authorization by Onboard Computer **20.** User preferences are stored in Onboard Computer **20** system Memory **22** just as in the cases described above. Engine Performance system **900** consists of several possible subsystems, including Engine RPM (i.e., revolutions per minute) subsystem **910;** Vehicle Speed subsystem **920;** Vehicle Acceleration subsystem **930;** Engine Emissions subsystem **940;** Fuel Miser subsystem **950;** and Load/Altitude Adjustment subsystem **960.** Once the user is identified to Onboard Computer **20** via User Interface **28,** Onboard Computer **20** analyzes the user ID to ascertain the user's security level. If the user has a sufficiently high security level, as authorized by Onboard Computer **20,** then the user may reset the user specific parameters for the engine performance subsystems in Engine Performance system **900.** It would be conducive to safe operation of the vehicle for certain users who do not possess the necessary skill, age or expertise to operate the vehicle safely, to be limited by the vehicle's performance. One way to limit the vehicle's performance is by limiting or restricting the engine's RPM via Engine RPM subsystem **910.** The engine might only be allowed to rev up to a certain level, say 4000 RPMs. Such a limitation would be advantageous where there is a possibility that a younger user might have the tendency to race an engine at a stoplight or in a garage to extremely high RPM levels which could damage the interior components of the engine. Another important aspect of the present invention is limitation of the vehicle's speed via Vehicle Speed subsystem **920.** Invariably, speed is an important factor in both the frequency and severity of on-the-road accidents. By limiting the vehicle's speed for novice users, the number and severity of these accidents can possibly be decreased. This is also an important concept for vehicles other than on-the-road vehicles, such as airplanes and marine vehicles.

Vehicle acceleration is another important component of a vehicle safety program. If vehicle acceleration is limited via Vehicle Acceleration subsystem **930,** the user can only accelerate the vehicle at a certain rate. This reduces the likelihood that younger users who enjoy the fast take-off from a red light or stop sign would participate in such activities. In the case of other vehicles, such as aircraft and marine vehicles, vehicle acceleration may also be measured in deceleration. Extremely rapid deceleration in an airplane or boat can cause the vehicle to become unstable. For instance, in an aircraft extremely rapid deceleration may cause the aircraft to flip or go into a spin that is not recoverable because the vehicle's forward momentum has been lost. Extremely rapid deceleration of a boat causes a wake of water to come over the stern of the boat, thus swamping the vehicle. Therefore, extremely rapid deceleration in aircraft or marine vehicles is highly undesirable.

Another subsystem controlled by Engine Performance system **900** is the Engine Emissions subsystem **940.** While Engine Emissions subsystem **940** would generally be inaccessible to the vehicle's operators, it might be advantageous to reduce engine emissions even further below the Environmental Protection Agency (EPA) recommended standards. Therefore, on certain days such as smog alert days and the like, engine emissions may be set to an even stricter standard via Engine Emissions subsystem **940.** Clearly this would have a detrimental effect on the performance of the vehicle and would not be appreciated by certain users. In a similar manner, Fuel Miser subsystem **950** may be set to require the vehicle's overall performance to maintain a certain vehicle fuel mileage. Although the vehicle operator may be allowed one or two quick accelerations, thereafter the performance of the vehicle would be strictly limited to make up for those accelerations and maintain the overall fuel efficiency of the vehicle.

Finally, Engine Performance system **900** contains Load/Altitude Adjustment subsystem **960.** Load/Altitude Adjustment subsystem **960** would change the engine's performance depending upon the altitude of the vehicle and the load the vehicle is carrying. Thus, when the vehicle is heavily loaded, as in the case of a truck pulling a boat, the vehicle performance characteristics would change from being a faster or faster accelerating vehicle to that of being a vehicle that is more adept for towing, especially up hills, boat ramps and the like. This, of course, would be at the expense of other performance characteristics in the subsystem.

As in Safety system **800,** Engine Performance system **900** would be inexorably linked to Theft Deterrence and Recovery subsystem **210.** Once Theft Deterrence and Recovery subsystem **210** detected an unauthorized user, the engine performance parameters stored in Memory **22** would set Engine Performance system **900** to levels that would make the vehicle inoperable. For instance, Vehicle Speed **920** parameters might be set to limit the vehicle to zero speed, and Engine RPM subsystem **910** might be set to limit the engine to zero RPM. Also, Vehicle Acceleration subsystem **930** could be set to zero. Thus, the vehicle's engine would be rendered inoperable.

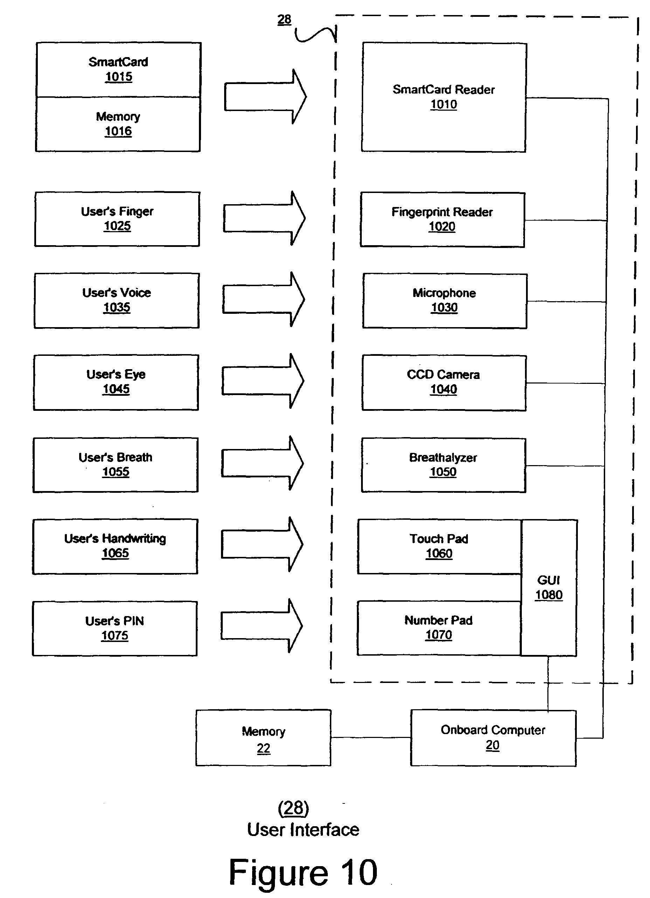

Another important aspect of the present invention is how the user interfaces with Onboard Computer **20. Figure 10** illustrates the user interface system as implemented in the present invention. User Interface system **28** may employ a variety of different subsystems, singularly or in combination with each other. One of the exciting new concepts to be available involves SmartCard **1015** and SmartCard Reader **1010.** SmartCards are well known in the industry and will not be described in detail here; but for the purpose of this invention, SmartCard **1015** contains at least Memory **1016** which is read by SmartCard Reader **1010.** When a user enters the vehicle, the user is identified by swiping SmartCard **1015** in SmartCard Reader **1010.** Onboard Computer **20** recognizes the input from SmartCard Reader **1010** and accesses Memory **22** for information concerning the user. In one embodiment, Onboard Computer **20** merely checks the data available from Memory **1016** on SmartCard **1015** with the data for the particular user stored in onboard system Memory **22.** In other embodiments, Onboard Computer **20** works in concert with a processor (not shown) on SmartCard **1015** in a series of ID verification steps designed to authorize the user.

Another advantage of SmartCard **1015** is that SmartCard Memory **1016** may contain other than merely numeric data. Memory **1016** may include all data pertaining to the owner of the SmartCard, including all user specific preferences applied in setting the various functions and sub-functions of the vehicle. Memory **1016** might also include user identification data such as the user's fingerprint pattern, the user's voice print pattern, the user's iris print pattern or the user's handwriting pattern. In one example, the card could actually initiate the authorization process via Onboard Computer **20.** The user would then be required to confirm identity on a second user interface, such as Fingerprint Reader **1020.**

Importantly, SmartCart Memory **1016** can be used to store user specific parameters for one vehicle or for several vehicles. In that same way, Memory **22** may store the user specific parameters for all users authorized to operate the vehicle.

System fraud and vehicle theft could be greatly reduced if the intended user who has authorized SmartCard **1015** could also be confirmed as the actual operator of the vehicle. The surest way to achieve this goal is to register some biological attribute, or biometric information, of the user with the vehicle interface. The most widely used biometric data which identifies users is an image or picture of the user. The second most useful biometric, and probably the easiest for an onboard system to analyze, would be a user's fingerprint. In another embodiment of the present invention, once SmartCard **1015** is read by SmartCard Reader **1010** and authorized by Onboard Computer **20,** the user is then required to input User's Finger **1025** via Fingerprint Reader **1020.** Onboard Computer **20** then compares the user's fingerprint pattern to either a fingerprint identified with the user's data stored in onboard Memory **22** or stored on SmartCard Memory **1016.** Once the user has been identified by Onboard Computer **20** as the rightful possessor of the SmartCard **1015,** Onboard Computer **20** then allows the user to access the highest level of security authorized within Onboard Computer **20.**

Verification of a user's ID may be accomplished by a number of other means, including Touch Pad **1060** or Number Pad **1070** via Graphical User Interface (GUI) **1080.** While GUI **1080** is advantageous, it is not essential to practice the present invention. In fact, GUI **1080** may include Touch Pad **1060** or it may not, or it may include Number Pad **1070** or it may not, or any one of the three could be used in combination.

In another embodiment, the present invention may require biometric user identification via a voice print stored in system Memory **22** or on SmartCard **1015** Memory **1016.** In that case, User Interface system **28** includes Microphone **1030.** The user interfaces with the system by inputting User's Voice **1035** to Microphone **1030** and then Onboard Computer **20** compares the voice pattern with that of the user's voice pattern stored in system Memory **22** or SmartCard **1015** Memory **1016.**

Biometric information stored in Computer memory **22,** or some other convenient memory, is useful for practicing certain aspects of the present invention other than verification of the user's identification. In an alternative embodiment of the present invention, the user is authorized by Onboard Computer system **20** by verbally entering the user's password into Microphone **1030,** rather than using Touch Pad **1060** or Number Pad **1070.** User identity verification is performed simultaneously by Onboard Computer system **20** rather than as a second step, thus saving the user the time needed for authorization. Changing user specific preferences associated with one or more onboard systems could also be performed simultaneously by merely speaking into Microphone **1030.** For instance, rather than the user first being authorized by Onboard Computer **20** and then entering the user specific preference via GUI **1080,** the user merely changes the preferences orally. Onboard Computer system **20** simultaneously recognizes the user's voice pattern from the voice pattern stored in memory and recognizes the user's speech commands. The user's speech is parsed for recognizable commands while authorizing the user's voice. Onboard System **20** then performs the user's commands, such as changing user specific preferences.

In an extreme example of one embodiment of the present invention, in an emergency, a rider in a vehicle might actually override the vehicle operator's access authority and change the operator's user specific performance preferences. For instance, if a vehicle operator is operating the vehicle in a careless or unsafe manner, or if the operator becomes disabled or unresponsive, the rider may verbally change the performance preferences, causing the vehicle to come to a stop. Because the rider's voice pattern and speech are recognized by Onboard Computer system **20,** the rider need not manually interface with the onboard computer.

Speech or voice recognition, as a general proposition, is well know in the art, and different methods are understood by those skilled in man-machine interfaces such as: U.S. Patent Number 5,671,328, "Method And Apparatus For Automatic Creation Of A Voice Recognition Template Entry", Fitzpatrick, September 23, 1997, Gregory P. *et al*, directed to a data processing system for automatically creating voice processing template entries from a plurality of commands received by the data processing system; U.S. Patent Number 5,664,061, "Interactive Computer System Recognizing Spoken Commands", September 2, 1997, Andreshak, *et al*, directed to an interactive computer system having a processor executing a target computer program and having a speech recognizer for converting an utterance into a command signal for the target computer program; and U.S. Patent Number 5,649,060, "Automatic Indexing And Aligning Of Audio And Text Using Speech Recognition", July 15, 1997, Ellozy, *et al*, directed to a method of automatically aligning a written transcript with speech in video and audio clips by using an automatic speech recognizer which decodes speech (recorded on a tape) and produces a file with a decoded text. Each of the above are assigned to the assignee of the present application and are incorporated by reference in their entirety.

Another important aspect of the present invention is pre-authorizing electronic transactions, E-Commerce, by merely verbalizing the transaction information. In so doing, the vehicle operator is free to generate commodity transaction data concerning a specific vendor while operating the vehicle. For instance, while entering the fueling station from the highway, a user might set parameters for authorization of a particular fuel vendor, grade and amount of fuel, and designation of a payment method. Thus, all information needed to conduct the transaction is compiled in advance of the vehicle entering the fueling station. Because the entire transaction is stored in onboard computer Memory **22**, once the vehicle is at the fuel pump, fueling is virtually automatic, requiring almost no interaction from the vehicle operator.

Other goods and services might also be initiated using speech recognition technology while operating the vehicle. Placing telephone calls, transmitting facsimiles, checking e-mail and accessing personal pagers would all be easily and safely accomplished while operating the vehicle using Cellular/PCS subsystem **520.** Even accessing long distance carriers and the Internet, and downloading pay-per-view entertainment events could be accomplished from within the vehicle. Alternatively, the present invention could be utilized for such mundane tasks as purchasing take-out fast food in advance while operating the vehicle so that the food is ready for pick-up when the vehicle arrives at the restaurant's drive-in window. While the present invention primarily utilizes a personal area network (PAN) technology for transferring pre-stored commodity transaction data between the vehicle and the vendor, Satellite Com Link subsystem **510** or Cellular/PCS subsystem **520** could easily perform the identical task.

The present invention would be especially helpful in situations such as long haul trucking where a vehicle operator is constantly picking up and delivering cargo, and entering into new payment and bond arrangements with different carriers.

Another possible means of verifying the user's identity includes the user's iris pattern. In this case, CCD Camera **1040** would input an image of User's Eye **1045** to Onboard Computer **20** for analysis and comparison with an iris pattern stored in system Memory **22** or on SmartCard Memory **1016.** In another embodiment, User Interface **28** might include a sample of the user's handwriting within system Memory **22** or within SmartCard Memory **1016.** The user would input a pre-determined sentence or series of words on Touch Pad **1060** as directed by the output of GUI **1080.** Onboard Computer **20** then compares that series of slashes and gestures with the pattern stored in system Memory **22.**

In another embodiment of the present invention, the user is merely required to enter the proper personal User's PIN **1075** via Number Pad **1070.** Although generally the personal identification number is an unchanging number that the user always possesses, recently and with the advent of GUIs, the personal identification number is more than merely a number. For instance, the personal identification number can actually be an operation the user applies to a number, or an 'algorithmic password.' An example of an algorithmic password is to display a number to the user, such as '1234,' via GUI **1080.** An algorithm known only to the user might be to subtract each of the outside digits from 10 and transpose the two inner digits. Thus, in response to seeing the number '1234,' the user inputs the number '9326' on GUI **1080.** Even someone watching the user input that number would have no idea what algorithm the user applied to the display number, as the operation is known only to the user. More complicated algorithms can be formulated to test the dexterity of the user. Such dexterity tests are well known as effective in deterring intoxicated users and users who are incapable of safely operating a vehicle due to lack of sleep or illness. In the final embodiment, User Interface **28** may include Breathalyzer **1050** to test User's Breath **1055** for alcohol content. A user that has been prone to drive while under the influence of drugs or alcohol would be required to demonstrate sobriety before being allowed to operate the vehicle. In this case, User's Breath **1055** can be analyzed by Onboard Computer **20** to detect the presence of known intoxicants. The user may be given several opportunities to pass the breathalyzer test before the user is de-authorized and the vehicle is disabled by Onboard Computer **20.**

Finally, a user possessing a sufficiently high security level, such as a master user or an administrator, may authorize subsequent identification verification by proxy, thereby allowing access to certain onboard systems by users which have been denied access on a verification basis. This is an important feature for resolving identification verification problems brought about by failure of an identification verification subsystem.

An important aspect of the present invention is that one or all of these identification verification subsystems can be included in User Interface system **28.** The advantage of SmartCard **1015** is that it contains Memory **1016,** which can be updated and obliterated while not in contact with Onboard Computer **20.** Unlike onboard computer Memory **22,** SmartCard **1015** can be read and updated while the user is not in the vehicle, in fact while the vehicle is not even in the user's possession. Therefore, the user specific preferences stored on SmartCard Memory **1016** can be updated by someone other than the user, placing the user at the mercy of the fleet dispatcher or vehicle owner or parents, or whomever is ultimately responsible for the vehicle. Also, the SmartCard might contain user preferences for a variety of different vehicles.

Alternatively, SmartCard Memory **1016** contains user specified parameters in an independent device format. By using an independent device format for storing user specified parameters, the user may set specified parameters which are desired for use by a variety of different vehicles and vehicle types. The device-independent parameters would then be transformed into device-dependent parameters by the onboard computer of any vehicle in which the SmartCard is inserted. While some parameters may require some fine tuning or tweaking once the user becomes accustomed to each different vehicle, the majority of the user specified parameters will fulfill the user's expectations without tweaking. Tremendous memory savings are achieved by storing user specific parameters in device-independent format on the SmartCard. Rather than storing multiple sets of user specific parameters on a variety of different vehicles, the one set of user specified parameters which is stored on the SmartCard is transformed into device-dependent parameters by any onboard computer of a specific vehicle into which the SmartCard is inserted.

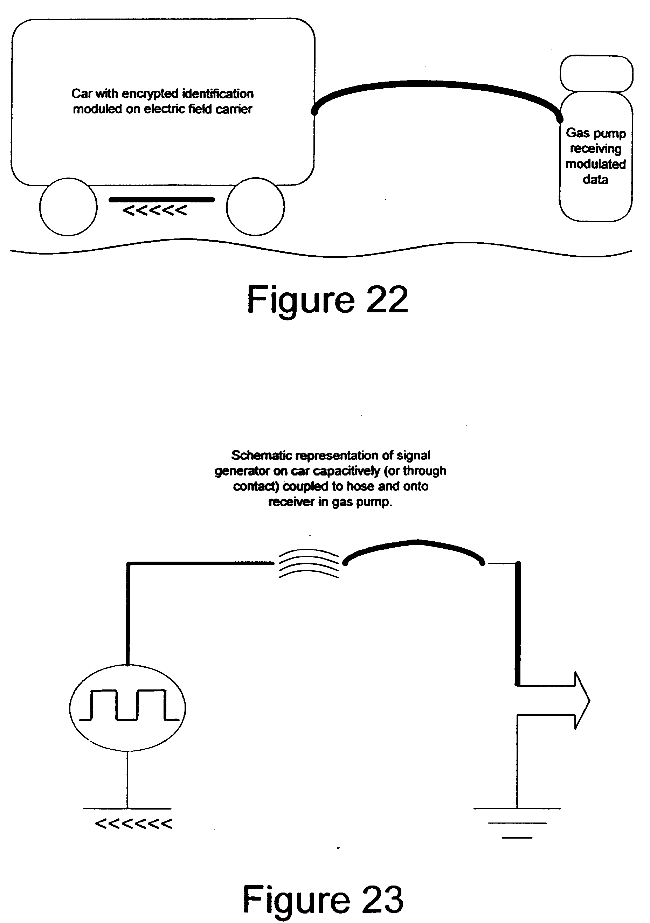

**Figure 22** illustrates a preferred embodiment of the present invention involving electronic commerce between a vehicle and a vendor. In a preferred embodiment of the present invention, the vehicle operator commences the fueling operation between a vehicle equipped with personal area network (PAN) technology, and a vendor computer system designed to communicate with a vehicle which incorporates PAN technology. PAN Technology is the subject of U.S. Patent No. 5,796,827, August 18, 1998, System And Method For Near-Field Human-Body Coupling For Encrypted Communication With Identification Cards, Coppersmith, Don *et al*, assigned to the assignee of the present application and is incorporated in its entirety herewithin. In this example, a vehicle such as a car with encrypted identification modulated on an electric field carrier communicates with a fuel pump which receives the modulated data indexed to the specific vehicle identification. Through the use of PAN technology, the means of transmission is through one of the fuel hose, the fuel itself or a hidden conductor incorporated in the fuel hose/nozzle apparatus. In such a configuration, the user merely connects the fuel nozzle to the fuel port in the vehicle and PAN technology transmission means authenticates both the vehicle and the vendor computer systems.

It is important to note that while a preferred embodiment of the present invention utilizes PAN technology for affecting the transaction data transfer, PAN need not be the only communications link and is not meant to limit the practice of the invention in any way. Satellite Com Link subsystem **510** or Cellular/PCS subsystem **520,** could easily perform transactional data transfer tasks, in advance of the vehicle connecting to the vendor's PAN data port or simultaneous with the commodity transaction.

**Figure 23** illustrates a representation of the modulated signal passing between the vehicle and the fuel pump using PAN technology. In one embodiment of the present invention, a modulated signal passes encrypted information between the vehicle and the fuel pump by either passing extremely low voltages through the hose itself or through a receiver in the pump which capacitively senses the modulated signal on the electronic field carrier of the vehicle. Again, the information contained on the carrier would be encrypted in order to protect both the vendor and the vehicle operator.

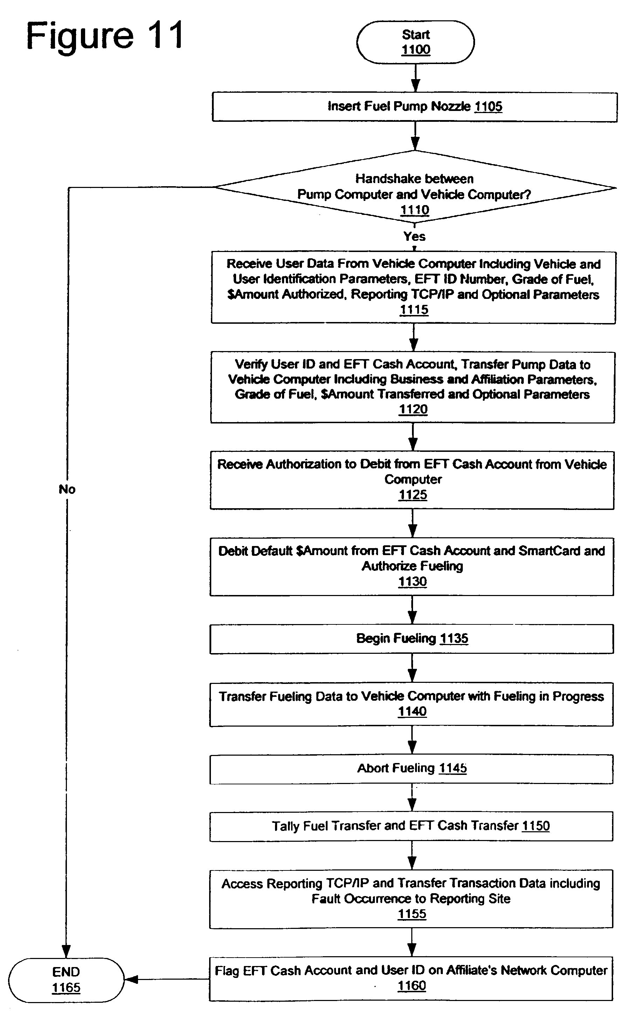

**Figure 11** illustrates one embodiment of the present invention. Through the use of a personal area network utilizing Personal Area Network (PAN) Technology, a vehicle can communicate autonomously with a vendor for predetermined goods and services with very little interaction from the user. In one embodiment of the present invention, the vendor is a fuel distributor. In this case, the process starts at step **1100.** The user inserts the fuel pump nozzle into the vehicle (step **1105**). The user may not need to insert the fuel nozzle; rather, the fuel nozzle may couple automatically to the vehicle, depending on the pumping configuration provided by the vendor. Additionally, the system may include infrared data sensing technology incorporated on the fuel nozzle, which would automatically sense proper insertion of the nozzle to the vehicle port. Standards set for infrared sensing protocols through The Infrared Data Association™ (IrDA), Walnut Creek, California. Using a nanovolt signal that passes through the hose between the vehicle and the pump computers, the pump computer attempts a handshake with the vehicle computer (step **1110).** If for some reason the handshake does not occur, the process ends and manual fueling by conventional means becomes necessary (step **1165).** If the handshake is successful, the pump computer receives data from the vehicle computer, including the vehicle and user identification parameters, the EFT cash ID number, the grade of fuel selected, the cash amount authorized, the reporting TCP/IP address and other optional parameters (step **1115).** An important feature of the present invention is that the user is relieved of the responsibility for any interaction with the vendor because all options concerning the transaction can be predetermined, selected in advance and included with the data to be transmitted to the vendor via the pump computer. The pump computer then transfers pump data to the vehicle computer, including the vendor or business and affiliation parameters, the grade of fuel, the cash amount intended to be transferred and other optional parameters provided by the vendor (step **1120).** The pump computer then receives a final authorization to debit from the cash account from the vehicle computer (step **1125).** The default cash amount can be held from the EFT cash account, SmartCard or personal/commercial credit card account, and the pump computer authorizes fueling up to the default amount (step **1130).** The user then begins fueling or, alternatively, the fueling begins automatically (step **1135).**

In one embodiment, while fuel is transferred from the pump to the vehicle, the fueling data corresponding to the fuel transfer is also transferred to the vehicle computer while fueling is in process (step **1140).** At some time, the fueling is discontinued (step **1145).** Fueling can either be discontinued on the operator's accord, or as an automatic function when the vehicle is full or as the default amount to be debited is reached. The pump computer then tallies the fuel transfer and the EFT cash transfer (step **1150).** During this procedure, the vehicle computer and the pump computer send status signals. If the flow of status signals between the vehicle computer and the pump computer is broken, the status at the time of the break is known by both the vehicle computer and the pump computer. In one embodiment, after fueling is complete and the fuel and cash transfers have been tallied, the pump computer will then access the vehicle's home base or reporting site either as an e-mail or through some other protocol using a TCP/IP address. The pump computer communicates the reports of the transaction as provided by the vehicle computer to the pump computer in step **1115,** to the designated reporting site. Optionally, this information may be secured by transmitting the signals as encrypted data between the vehicle computer and the pump computer. The report includes any fault that may have occurred during the fueling (step **1155).** During this reporting, if there is a discrepancy between the fuel transfer and the EFT cash transfer, or if a fault occurs during the fueling, or if a personal credit card is used, the pump computer notes this occurrence and attempts to reconcile the two accounts with the computer at the vehicle's home base. The pump computer or the affiliate's computer flags the EFT cash account and the user ID on the affiliate's network computer (step **1160).** In that way, the affiliate system can keep better track of this particular EFT cash account and user ID for any suspicious activity and also ensure that the EFT cash was actually debited from the user's account. The process ends at step **1165.**

Returning to step **1155,** the pump computer attempts to communicate to the reporting site via either cellular, PCS, satellite communication link or some other communication means. This information may be communicated via land line to the reporting site's TCP/IP address as an e-mail or through some other more sophisticated protocol. This is an important feature of the present invention because, in so doing, the reporting site, which may be a large vehicle terminal, can enter the data to the vehicle, and the user of the vehicle then may transfer the data in reconciled form back to the vehicle via Communications/Interface system **500.**

The communications system then enters the fueling data to the appropriate log, such as Maintenance Log **640** and Driving Log **650.** In this way, the vehicle itself can automatically track its performance based on the amount of fuel the vehicle requires at certain times while enroute. As a result, an expert mechanic can read Maintenance Log **640** and compare it to Driving Log **650** and thus determine the efficiency level of fuel consumption. A mechanic can also, by evaluating Maintenance Log **640** and Driving Log **650,** gather other important information. For instance, after the vehicle has been refueled at a number of various stations, the mechanic can determine which brand of fuel produces the best performance from which vehicles. As well, the mechanic can determine if there is any pilfering of fuel from the vehicles while they are parked for the next day's use. Maintenance Log **640** could also have automatic functions that alert the user via GUI subsystem **1080** as to what the fuel efficiency is over a period of time and/or as the user is operating the vehicle.

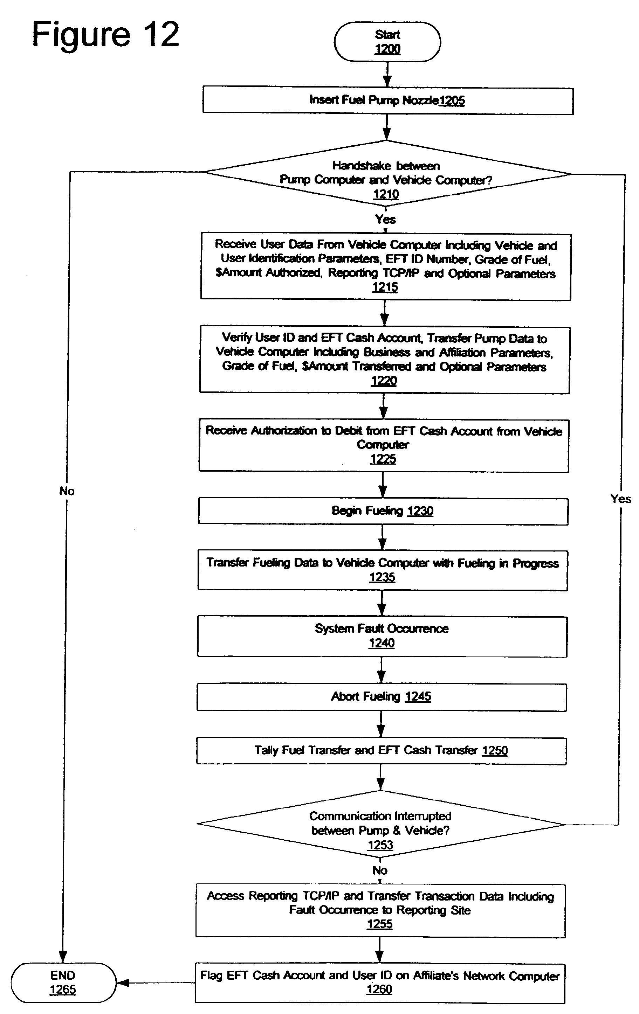

**Figure 12** illustrates another embodiment of the present invention involving a fault occurrence during the fuel transfer process. **Figure 12,** steps **1200** to **1235,** are identical to steps **1100** to **1135** in the previous illustration (**Figure 11).** Beginning at step **1235,** the fuel is transferred from the pump to the vehicle along with the corresponding data about the fuel transfer. At some time during the process, a system fault is detected by the pump (step **1240).** Fueling is immediately aborted (step **1245).** The pump then tallies the fuel transfer and the EFT cash transfer (step **1250).** Then however, rather than completing the process, the pump computer determines if the communications have been interrupted between the pump and the vehicle (step **1253).** If there has been an interruption, control is passed back to step **1210** where the pump again attempts a handshake between itself and the vehicle computer. If the handshake is successful, the process starts anew and fueling is resumed where it left off at step **1210.** If no handshake can be established, the process is ended. If, however, there is no communication between the pump and Onboard Computer **20,** there may be a fault in either the pump communication system or the PAN interface of the vehicle computer. In this case, the pump accesses the reporting site as described above and transfers the transmission data to the reporting site, including the fault occurrence information (step **1255).** Step **1255** is also performed if communication between the pump computer and the vehicle computer remains intact. Again, because there was an interruption in the fueling, whether or not a communication link exists between the pump and vehicle, the user's cash account and the user ID are flagged on the affiliate's network computer. Flagging alerts the vendor that there was a problem with the last fuel transfer between the vehicle and the computer (step **1260).** The process then ends at step **1265.**

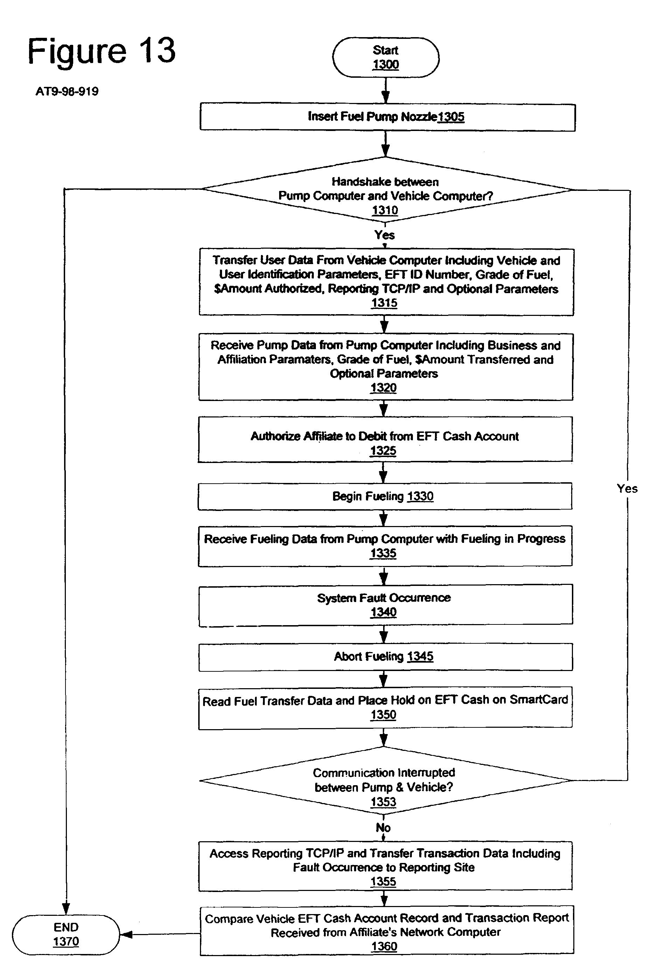

**Figure 13** is identical to **Figure 12,** except that it takes the perspective of the vehicle's onboard computer. The process starts at step **1300** where the vehicle operator inserts the fuel nozzle into the vehicle at step **1305.** The vehicle Onboard Computer **20** looks for a handshake between the pump computer and the vehicle computer (step **1310).** The handshake data will be transferred to the vehicle onboard computer through a Personal Area Network Port **530** of Communications/Interface system **500.** If no handshake data is transferred from the pump computer to the vehicle computer, then it cannot be assumed that the vendor is equipped to handle PAN technology and the process ends at step **1370.** If the transfer is successful, the vehicle transfers certain data from the vehicle's computer, including the identity of the vehicle and data, the EFT number, the grade of fuel desired, the cash amount authorized, the reporting TCP/IP address or communications ports, and optional parameters (step **1315).** This step relieves the user of many of the mundane tasks that a vehicle operator typically must perform at a fuel stop. For instance, the user need not select the grade of fuel, turn on the pump or pay the cashier; and in some cases, the user may not even need to insert the fuel nozzle into the vehicle because that activity is automated as well.

Onboard Computer **20** then receives pump data from the pump computer, including the business and affiliation parameters, the grade of fuel intended to be transferred, the cash amount intended for transfer which was mirrored from the vehicle in step **1315,** and other optional parameters (step **1320).** Onboard Computer **20** then authorizes the affiliate to debit from the EFT cash account the amount agreed upon in steps **1315** and **1320** (step **1325).** The fueling process begins at step **1330.** As the fueling process progresses, the onboard computer receives fueling data from the pump computer, including the amount of fuel transferred and the status of the systems during the transfer (step **1335).** If Onboard Computer **20** detects a fault during the fuel transfer process (step **1340),** the fueling is immediately aborted (step **1445).** Because the transfer of fuel is largely controlled by the pump, aborting the fueling process might consist of the vehicle onboard computer notifying the pump computer that fueling has been completed, thereby attempting to force the pump computer to terminate the fueling process. Also, because a fault during the fueling process could be a safety issue, Onboard Computer **20** might attempt to warn the user via Warnings, Gauges and Lights subsystem **830** or GUI subsystem **1080.**

In any case, some time after the fault is detected the fueling process is aborted. The onboard computer then reads the last fuel transfer data transferred from the pump computer and checks the EFT cash transfer on the SmartCard account (step **1350).** The onboard computer then tries to determine if there has been an interruption in communication between the pump and the vehicle. If so, Onboard Computer **20** looks for another handshake between the pump and computer and returns to step **1310.** If the handshake is completed, the process begins anew at step **1315.** However, if no communication is apparent between the pump computer and the vehicle computer, the vehicle computer will access the reporting TCP/IP address of its reporting site and report the transaction fault, including the amount transferred. The vehicle computer will also alert the reporting site to the possibility of a hold placed on the EFT account (step **1355).** This could normally be done through Communications/Interface system **500** either via Cellular PCS subsystem **520** or Satellite Com Link **510.** The reporting site is thus aware that the fault has occurred in the fueling process; and when the affiliate which controls the pump computer contacts the reporting site, the reporting site is available with the vehicle data to reconcile the report as it comes in from the affiliate. At some point, the vehicle must reconcile its own EFT cash account record with the vehicle transaction report received from the affiliate's network computer. If the handshake has been reestablished or no fault occurred, this is a normal step in the process. If not, the pump computer may require communications back from the vehicle's home reporting site before the reconciliation can be accomplished at step **1360.** Once the appropriate communications have been established and reconciliation occurs at the vehicle's home site, the vehicle can then reconcile its own EFT cash account or SmartCard. Confirmation is then reported to the home site via the TCP/IP address (step **1365).** The process then ends at step **1370.**

Other embodiments of the present invention are also possible. For instance, rather than having the cash available on a SmartCard, the pump computer may contact the affiliate or the affiliate's financial institution to debit it automatically from the home user's financial account. A record still could be kept by Onboard Computer **20** and/or at the vehicle's home reporting site. However, no actual transferable cash would be held on a SmartCard or in a vehicle computer's memory. In another embodiment, the system may utilize both cash transfer options. For instance, the primary option would be to transfer from the user's financial institution a cash amount to cover the fuel transfer. However, if for some reason the link to the financial institution is down or some other problem occurs within either the user's system, the financial network or the pump system, cash may be available on a SmartCard in an emergency. In that case, the SmartCard is debited for the cash amount of the fuel transfer.

In other embodiments, PAN technology works in concert with the other systems controlled by Onboard Computer **20.** For instance, when the operator of the vehicle detects that the fuel level is nearing a point where the fuel needs to be replenished, Maintenance Log **640** may automatically evaluate which fuel brands and grades provide the best performance for the vehicle. That information could then be transferred to Maps and Databases subsystem **620,** and the operator of the vehicle could then be informed as to the identities of those vendors of the best performing brands along the vehicle's route. The vehicle operator could even be given directions from the exact position where the vehicle is located to the next possible refueling stop along the route via GPS subsystem **610** (for locating the vehicle) and Maps and Databases subsystem **620.** If Onboard Computer **20** detects that the vehicle has passed a suitable vendor, the system could identify the next possible vendor along the vehicle's route via Maps and Databases subsystem **620** and provide directions for that vendor to the vehicle operator based on the vehicle position ascertained by GPS subsystem **610.**

As can be seen, the fully integrated PAN technology, along with Onboard Computer system **20,** provides significant convenience and time savings for the vehicle operator. More importantly, detailed records of performance, maintenance and cost control are provided to the fleet controllers of the vehicle. The problem of maintenance and use costs increases exponentially with the number of vehicles, yet with the system of the present invention in place, the amount of physical activity needed to be performed in many aspects actually decreases. This is because the time required for updating maintenance logs, driving records and performance records does not significantly increase as the number of vehicles in use increases. Therefore, problems associated with vehicle performance or efficiency, or issues associated with vendor problems, would come to light much earlier than with a single vehicle thereby further reducing the cost of the system and increasing its convenience.

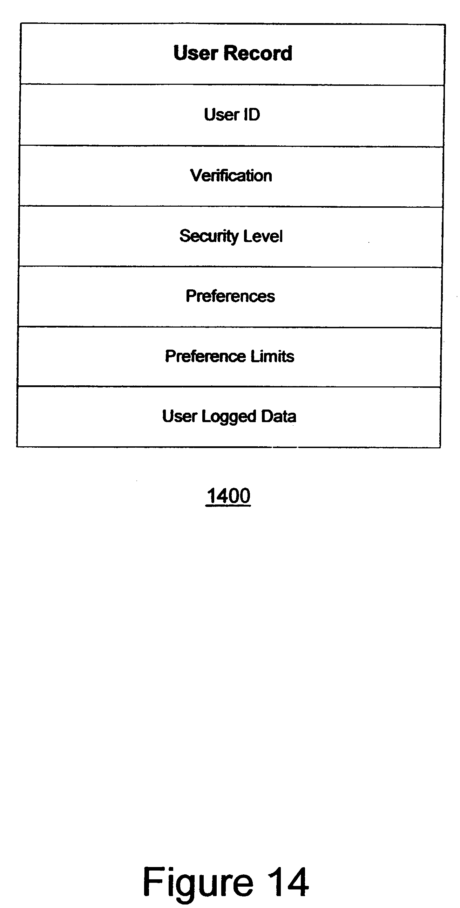

**Figures 14 to 21** illustrate the data structure of the present invention, which can be stored in SmartCard Memory **1016,** Onboard Computer **20** Memory **22,** or even as encrypted information on a swipe card. At a low level, the data structure contains several fields of data which are unique to the user. User Record **1400** shows fields having user ID verification, security level preference limits and user logged data. Each field of User Record **1400** is in turn dynamically linked to other lists containing more detail associated with the fields listed under User Record **1400.**

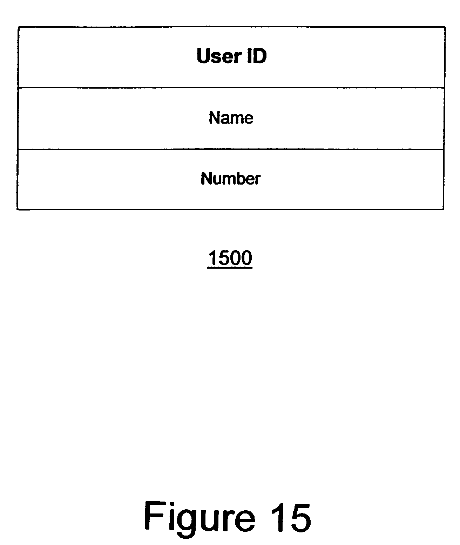

**Figure 15** illustrates the User ID data structure. User ID data structure **1500** has two fields, the user's name and the user's ID number. Either of these fields can be used as a means to identify a user and then retrieve data concerning the user from one of the above-mentioned memories.

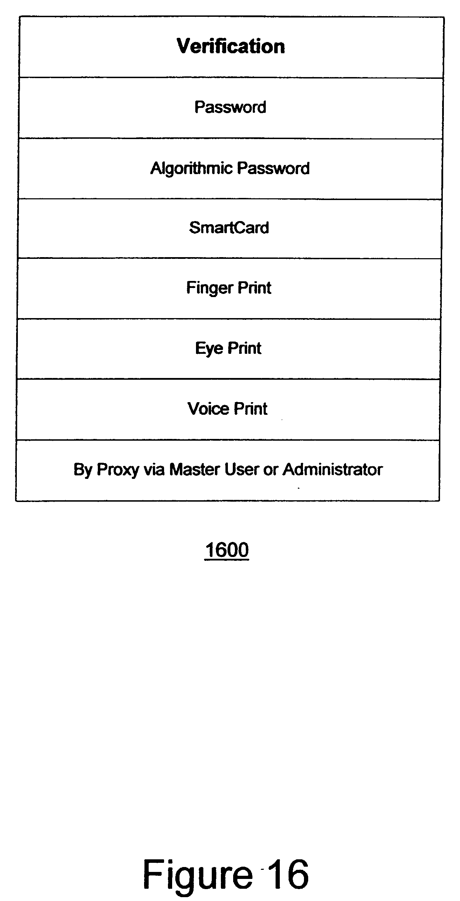

**Figure 16** illustrates the Verification data structure **1600.** Once the user has been identified, a verification sequence takes place as described above discussing User Interface **28.** Pertinent data used in identification of the user are stored in Verification **1600** data structure or, alternatively, links may be provided for memory addresses where pertinent data is located in memory. Verification **1600** data structure contains a password known only to the user which may be in the form of a pin number, algorithmic password, handshake data for verifying the user's SmartCard, pertinent finger print data, eye print data, voice print data, and finally, a field for verifying a proxy which has been authorized by a user at the master security level or higher. The information contained in these fields is used to verify that the person intending to operate the vehicle is actually the person who is identified in User ID **1500.**

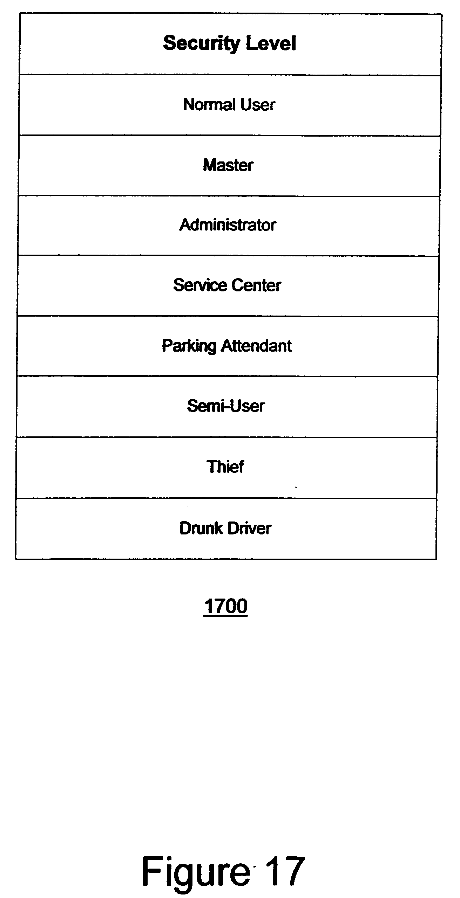

**Figure 17** illustrates Security Level data structure **1700.** Once positive identification of the user has been established, the user is granted a security level by Onboard Computer **20.** Security Level **1700** data structure shows different levels of security. As mentioned before, these are normal user, master user, administrator, service center, parking attendant or semi-user, thief and, finally, drunk driver. Each level of security authorizes the user to access a prescribed set of preferences and preference limits that are associated with that particular security level. As described above, a normal user is granted access to all of the non-critical systems of the vehicle. Therefore, the normal user can then re-set preferences in any one of those non-critical systems or subsystems. A master user, on the other hand, is given access to even more systems, including the more critical systems. A master user can not only set preferences associated with the non-critical systems, but can also set preferences associated with the critical systems.

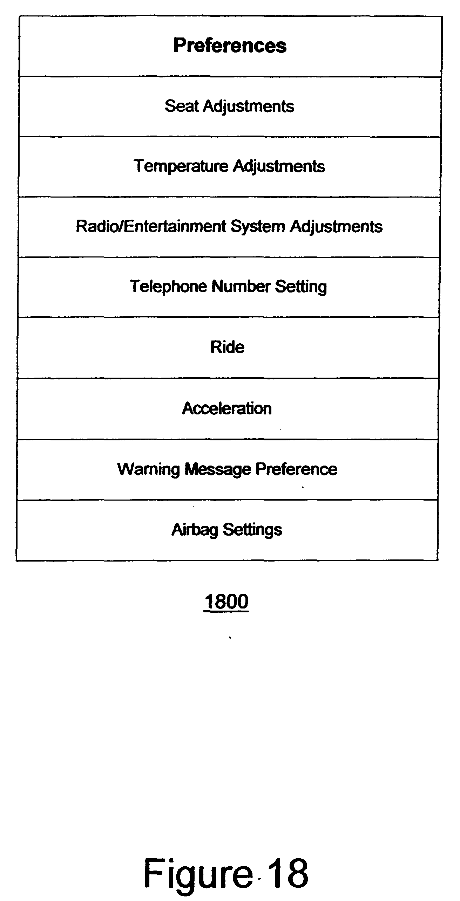

**Figure 18** illustrates an extremely abbreviated data structure of possible Preferences. Preferences **1800** data structure includes seat adjustments, temperature adjustments, radio/entertainment system adjustments, telephone number settings, ride preferences, acceleration preferences, warning message preferences and airbag settings fields. In actuality, the number of potential preferences to be set would at least be equal to the number of subsystems being controlled by Onboard Computer **20** and may include many times more, as each subsystem may have several associated user specific preferences. An administrator, however, may be authorized to do more than set preferences, whether critical or non-critical. An administrator may be authorized to set preference limits for all users of the particular vehicle.

**Figure 19** illustrates Preference Limits **1900** data structure. In many ways, preference limits would act as system default preferences. Once preference limits are entered in the fields associated with Preference Limits **1900** data structure, they would be retained in Onboard Computer **20** Memory **22** as the system defaults. In this example, preference limits can only be reset by a user having an administrator security level. Therefore, while certain users such as master level users may be able to adjust user specific preference settings within these limits, a master user may not be able to adjust user specific preferences above the preference limits.

**Figure 20** illustrates User Logged Data **2000** data structure. As briefly discussed above, User Logged Data **2000** data structure is indexed by user and compiled by Onboard Computer **20** from events occurring during the user's control of the vehicle. For instance, the first three fields contain routine maintenance and operator log information, hours of engine time, hours logged in and miles traveled. The fourth field concerns the amount of money that was spent by the user. In one embodiment, the SmartCard may have a pre-determined cash value. As the user proceeds along the trip and consumes goods and services needed during that trip, the amount of cash consumed could be automatically logged in this field. Other fields concerning the vehicle's operation include maximum speed attained, the average speed maintained, the average acceleration, maximum engine RPM, data regarding antilock brake engagement, traction control data and data regarding airbag deployment. Other fields that might be useful for an administrator or persons having responsibility for the vehicle, might be the maximum distance from home the vehicle traveled, the maximum distance from a set route the vehicle traveled, the maximum distance tracked from a pre-set destination and a GPS trip tracking field. A GPS trip tracking field would probably be linked to graphic data compiled by Navigation and Tracking system **600** using Maps and Databases subsystem **620** and GPS system **610.** There, an administrator could view a graphic image of the exact routes the vehicle traveled, including time annotations. Finally, a field for services used while a particular user operated the vehicle is provided. This also may be linked to another list tracking such things as the amount of fuel purchased, services rendered to the vehicle such as washings or lube jobs, etc. or towing amounts.

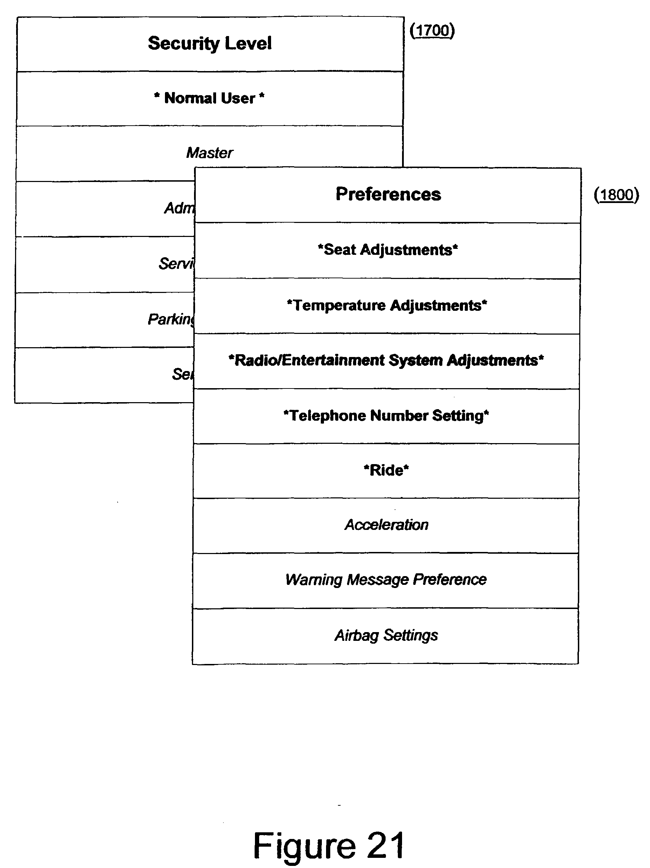

**Figure 21** illustrates an example of how Onboard Computer **20** authorizes user specific preferences by user security level. In the example in **Figure 21,** Security Level **1700** data structure indicates that the user has been identified as a normal user. This is seen as the normal user field being highlighted while the remaining user fields are de-emphasized and presented in italics. When Preferences **1800** data structure is pulled up for the user authorized as a normal user, certain fields remain active while other fields are de-activated. Active fields for a normal user would include such preferences as seat adjustments, temperature adjustments, radio/entertainment system adjustments, telephone number settings and ride preferences. Preferences not under the control of a normal user might be acceleration, warning message preferences and airbag settings. This is an important concept because, while a user may be allowed to set the user's own specific preferences in every field, Onboard Computer **20** will only accept those fields which have been authorized under that security level. In the depicted example, a normal user is not authorized to set acceleration preferences, warning message preferences or airbag settings. Therefore, even if a user record contains entries in those fields, Onboard Computer **20** uses the default settings already available to it in Memory **22,** which were preset by a system administrator, thereby prohibiting the normal user from inputting the entries in those fields.

It is important to note that, while the present invention has been described in the context of a fully functioning data processing system, those of ordinary skill in the art will appreciate that the processes of the present invention are capable of being distributed in a form of a computer readable medium of instructions and a variety of forms, and that the present invention applies equally regardless of the particular type of signal bearing media actually used to carry out the distribution. Examples of computer readable media include recordable-type media such as floppy discs, hard disk drives, RAM, CD-ROMs and transmission-type media such as digital and analog communications links.

The description of the present invention has been presented for purposes of illustration and description but is not limited to be exhaustive or limited to the invention in the form disclosed. Many modifications and variations will be apparent to those of ordinary skill in the art. This embodiment was chosen and described in order to best explain the principles of the invention and the practical application, and to enable others of ordinary skill in the art to understand the invention for various embodiments with various modifications as are suited to the particular uses contemplated.

## Claims

1. A method for performing a commodity transaction from a vehicle wherein the method is performed on a data processing system, the method comprising:
communicating to a second data processing system with an onboard data processing system;
identifying the second data processing system;
accessing commodity transaction data in a memory associated with the identity of the second data processing system;
transferring at least a portion of the commodity transaction data to the second data processing system;
performing a commodity transaction in response to transferring at least a portion of the commodity transaction data; and verifying an occurrence of the commodity transaction.

2. The method according to claim 1 wherein the step communicating to the second data processing system further comprises:
handshaking between systems.

3. The method according to claim 1 wherein the onboard data system is included within a personal area network onboard a vehicle.

4. The method according to claim 1 wherein the commodity transaction involves one of fuel, toll, maintenance, governmental fee or process, and commercial service.

5. A data processing system for performing a commodity transaction from a vehicle, the system comprising:
communicating means for communicating to a second data processing system with an onboard data processing system;
identifying means for identifying the second data processing system;
accessing means for accessing commodity transaction data in a memory associated with the identity of the second data processing system;
transferring means for transferring at least a portion of the commodity transaction data to the second data processing system;
performing means for performing a commodity transaction in response to transferring at least a portion of the commodity transaction data; and
verifying means for verifying an occurrence of the commodity transaction.

6. The system according to claim 5 wherein the communicating means for communicating to the second data processing system further comprises:
handshaking means for handshaking between systems.

7. A vendor data processing system for performing a commodity transaction with a vehicle, the system comprising:
communicating means for communicating to an onboard data processing system;
identifying means for identifying the onboard data processing system;
receiving means for receiving commodity transaction data from the onboard data processing system;
accessing means for accessing vendor commodity transaction data in a memory associated with the identity of the onboard data processing system;
performing means for performing a commodity transaction in response to identifying the onboard data processing system, receiving commodity transaction data, and accessing vendor commodity transaction; and
verifying means for verifying an occurrence of the commodity transaction.

8. A computer program product for performing a commodity transaction from a vehicle wherein the product implemented in a series of instructions on a computer readable medium and performed on data processing system, the instructions comprising:
instructions for communicating to a second data processing system with an onboard data processing system;
instructions for identifying the second data processing system;
instructions for accessing commodity transaction data in a memory associated with the identity of the second data processing system;
instructions for transferring at least a portion of the commodity transaction data to the second data processing system;
instructions for performing a commodity transaction in response to transferring at least a portion of the commodity transaction data; and
instructions for verifying an occurrence of the commodity transaction.

9. A computer program product for performing a commodity transaction with a vehicle wherein the computer program product is implemented as a series of instruction on a computer readable medium and performed on a vendor data processing system, the instructions comprising:
instructions for communicating to an onboard data processing system;
instructions for identifying the onboard data processing system;
instructions for receiving commodity transaction data from the onboard data processing system;
instructions for in response to receiving commodity transaction data, accessing vendor commodity transaction data in a memory associated with the identity of the onboard data processing system;
instructions for performing a commodity transaction in response to identifying the onboard data processing system, receiving commodity transaction data, and accessing vendor commodity transaction; and
instructions for verifying an occurrence of the commodity transaction.

10. A method in a host data processing system for processing a fuel transfer at a station from the station to a vehicle containing a mobile computing system, the method comprising the data processing system implemented steps of:
responsive to detecting a connection between the station and the vehicle via a fuel transfer conduit, establishing communications between a host data processing system and a mobile computing system through the fuel transfer conduit connecting the vehicle with the station; and
responsive to establishing a communications link though the fuel transfer conduit, performing a transaction to pay for the fuel transfer to the vehicle.
